(19) Europäisches Patentamt / European Patent Office / Office européen des brevets

(11) **EP 4 252 021 B1**

(12) **EUROPEAN PATENT SPECIFICATION**

(45) Date of publication and mention
of the grant of the patent:
**12.02.2025 Bulletin 2025/07**

(21) Application number: **21819421.5**

(22) Date of filing: **23.11.2021**

(51) International Patent Classification (IPC):
*G01S 1/04* *(2006.01)*    *G01S 5/00* *(2006.01)*
*G01S 5/02* *(2010.01)*    *H04W 64/00* *(2009.01)*
*H04W 48/12* *(2009.01)*

(52) Cooperative Patent Classification (CPC):
**G01S 5/01; G01S 1/0428; G01S 5/0268;**
**H04W 64/00;** H04W 48/12

(86) International application number:
**PCT/EP2021/082662**

(87) International publication number:
**WO 2022/112241 (02.06.2022 Gazette 2022/22)**

(54) **POSITIONING REFERENCE SIGNALING FOR POSITION MEASUREMENTS IN WIRELESS COMMUNICATION SYSTEMS**

POSITIONIERUNGSREFERENZSIGNALISIERUNG FÜR POSITIONSMESSUNGEN IN DRAHTLOSEN KOMMUNIKATIONSSYSTEMEN

POSITIONNEMENT DE SIGNALISATION DE RÉFÉRENCE DESTINÉ À DES MESURES DE POSITION DANS DES SYSTÈMES DE COMMUNICATION SANS FIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.11.2020 EP 20210056**

(43) Date of publication of application:
**04.10.2023 Bulletin 2023/40**

(73) Proprietor: **Fraunhofer-Gesellschaft zur
Förderung
der angewandten Forschung e.V.
80686 München (DE)**

(72) Inventors:
• **ALAWIEH, Mohammad
91058 Erlangen (DE)**

• **MOMANI, Mohammad
91058 Erlangen (DE)**
• **GHIMIRE, Birendra
91058 Erlangen (DE)**

(74) Representative: **Zimmermann, Tankred Klaus et al
Schoppe, Zimmermann, Stöckeler
Zinkler, Schenk & Partner mbB
Patentanwälte
Radlkoferstrasse 2
81373 München (DE)**

(56) References cited:
US-A1- 2017 111 880    US-A1- 2018 217 228
US-A1- 2020 225 309    US-A1- 2020 351 618

**Description**

The present invention relates to the field of wireless communication systems or networks, more specifically to the localization of user devices, like mobile terminals, in such a network. Embodiments are related to occasional transmission of positioning reference signals, as used, for example, in 5G communication networks.

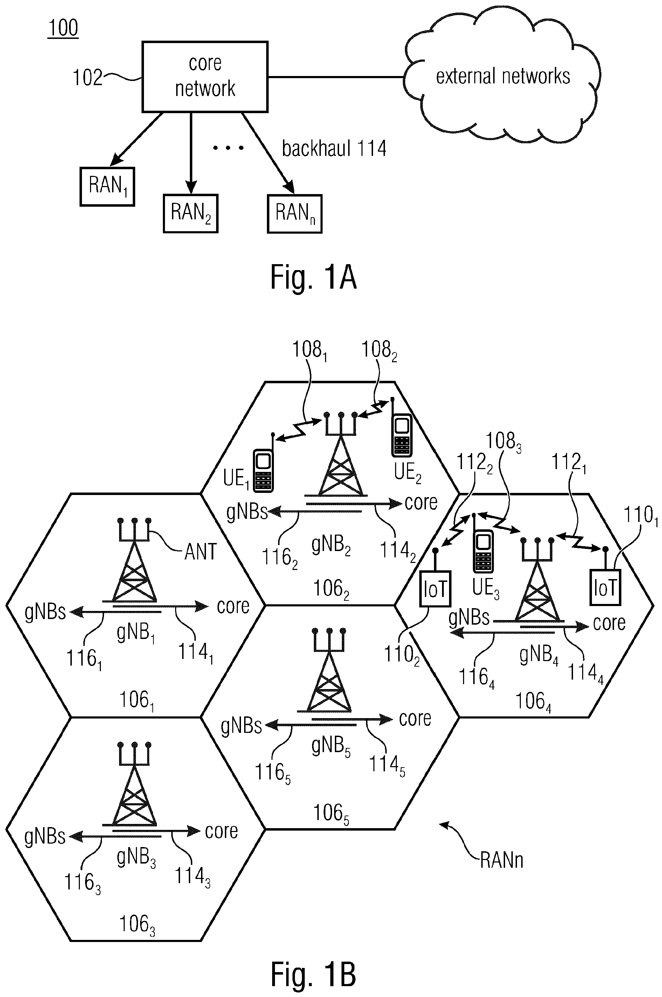

Fig. 1 is a schematic representation of an example of a terrestrial wireless network 100 including, as is shown in Fig. 1(a), the core network 102 and one or more radio access networks $RAN_1$, $RAN_2$, ... $RAN_N$. Fig. 1(b) is a schematic representation of an example of a radio access network $RAN_n$ that may include one or more base stations $gNB_1$ to $gNB_5$, each serving a specific area surrounding the base station schematically represented by respective cells $106_1$ to $106_5$. The base stations are provided to serve users within a cell. The one or more base stations may serve users in licensed and/or unlicensed bands. The term base station, BS, refers to a gNB in 5G networks, an eNB in UMTS/LTE/LTE-A/ LTE-A Pro, or just a BS in other mobile communication standards. A user may be a stationary device or a mobile device. The wireless communication system may also be accessed by mobile or stationary IoT devices which connect to a base station or to a user. The mobile devices or the IoT devices may include physical devices, ground based vehicles, such as robots or cars, aerial vehicles, such as manned or unmanned aerial vehicles, UAVs, the latter also referred to as drones, buildings and other items or devices having embedded therein electronics, software, sensors, actuators, or the like as well as network connectivity that enables these devices to collect and exchange data across an existing network infrastructure. Fig. 1(b) shows an exemplary view of five cells, however, the $RAN_n$ may include more or less such cells, and $RAN_n$ may also include only one base station. Fig. 1(b) shows two users $UE_1$ and $UE_2$, also referred to as user equipment, UE, that are in cell $106_2$ and that are served by base station $gNB_2$. Another user $UE_3$ is shown in cell $106_4$ which is served by base station $gNB_4$. The arrows $108_1$, $108_2$ and $108_3$ schematically represent uplink/downlink connections for transmitting data from a user $UE_1$, $UE_2$ and $UE_3$ to the base stations $gNB_2$, $gNB_4$ or for transmitting data from the base stations $gNB_2$, $gNB_4$ to the users $UE_1$, $UE_2$, $UE_3$. This may be realized on licensed bands or on unlicensed bands. Further, Fig. 1(b) shows two IoT devices $110_1$ and $110_2$ in cell $106_4$, which may be stationary or mobile devices. The IoT device $110_1$ accesses the wireless communication system via the base station $gNB_4$ to receive and transmit data as schematically represented by arrow $112_1$. The IoT device $110_2$ accesses the wireless communication system via the user $UE_3$ as is schematically represented by arrow $112_2$. The respective base stations $gNB_1$ to $gNB_5$ may be connected to the core network 102, e.g. via the S1 interface, via respective backhaul links $114_1$ to $114_5$, which are schematically represented in Fig. 1(b) by the arrows pointing to "core". The core network 102 may be connected to one or more external networks. The external network may be the Internet or a private network, such as an intranet or any other type of campus networks, e.g. a private WiFi or 4G or 5G mobile communication system. Further, some or all of the respective base stations $gNB_1$ to $gNB_5$ may be connected, e.g. via the S1 or X2 interface or the XN interface in NR, with each other via respective backhaul links $116_1$ to $116_5$, which are schematically represented in Fig. 1(b) by the arrows pointing to "gNBs". A sidelink channel allows direct communication between UEs, also referred to as device-to-device, D2D, communication. The sidelink interface in 3GPP is named PC5.

For data transmission a physical resource grid may be used. The physical resource grid may comprise a set of resource elements to which various physical channels and physical signals are mapped. For example, the physical channels may include the physical downlink, uplink and sidelink shared channels, PDSCH, PUSCH, PSSCH, carrying user specific data, also referred to as downlink, uplink and sidelink payload data, the physical broadcast channel, PBCH, carrying for example a master information block, MIB, and one or more of a system information block, SIB, one or more sidelink information blocks, SLIBs, if supported, the physical downlink, uplink and sidelink control channels, PDCCH, PUCCH, PSSCH, carrying for example the downlink control information, DCI, the uplink control information, UCI, and the sidelink control information, SCI, and physical sidelink feedback channels, PSFCH, carrying PC5 feedback responses.

For the uplink, the physical channels may further include the physical random-access channel, PRACH or RACH, used by UEs for accessing the network once a UE synchronized and obtained the MIB and SIB. The physical signals may comprise reference signals or symbols, RS, e.g. a positioning reference signal (PRS), a sounding reference signal (SRS), synchronization signals and the like. The resource grid may comprise a frame or radio frame having a certain duration in the time domain and having a given bandwidth in the frequency domain. The frame may have a certain number of subframes of a predefined length, e.g. 1ms. Each subframe may include one or more slots of 12 or 14 OFDM symbols depending on the cyclic prefix, CP, length. A frame may also include of a smaller number of OFDM symbols, e.g. when utilizing a shortened transmission time interval, sTTI, or a mini-slot/non-slot-based frame structure comprising just a few OFDM symbols.

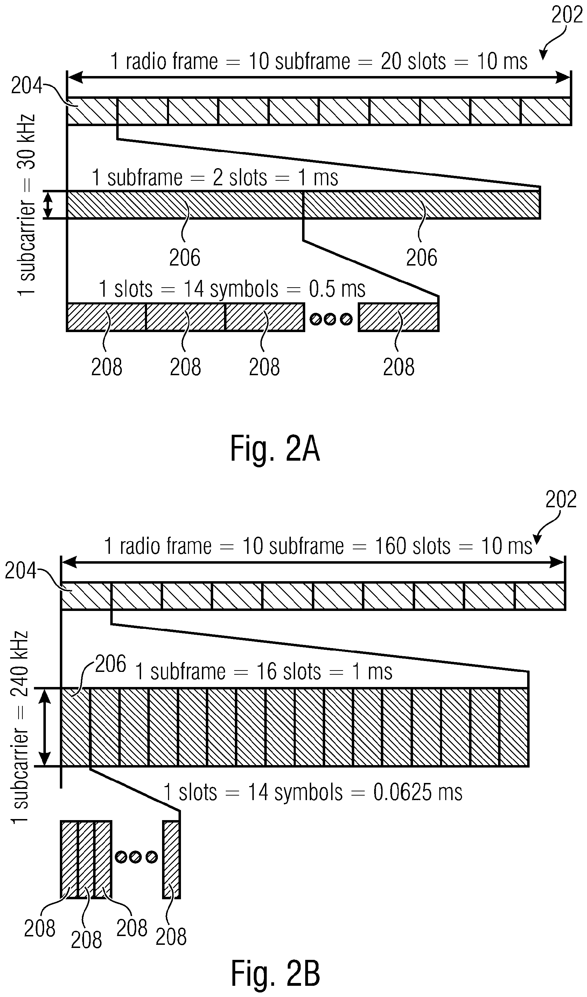

Fig. 2 illustrates two examples for slot configurations for subcarrier spacings of 30 kHz, shown in Fig. 2A, and 240 kHz, shown in Fig. 2B. For example, a physical radio channel may be subdivided into subsequent time intervals, called a radio frames 202, each of which may be subdivided into 10 subframes, as shown in the following table:

| Radio Frame | SFN_0 | | | | | | | | | | ... | SFN_N | | | | | | | | | | |
|---|---|---|---|---|---|---|---|---|---|---|---|---|---|---|---|---|---|---|---|---|---|---|
| Subframe | 0 | 1 | 2 | 3 | 4 | 5 | 6 | 7 | 8 | 9 | ... | 0 | 1 | 2 | 3 | 4 | 5 | 6 | 7 | 8 | 9 | |

One radio frame 202 has a length of 10 ms and is subdivided into a number of 10 subframes 204. Accordingly, each of the subframes 204 has a length of 1 ms. A number of slots 206, into which each of the subframes 204 is subdivided, may depend on the subcarrier spacings, for example according to the following table [cf. 3GGP38.211, Table 4.3.2 -1], wherein $\mu$ may be an index for indicating the subframe subdivision:

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

The following table associates different values of the subcarrier spacings to respective slot configurations:

| 15KHz | Slot 0 | | | | | | | | | | | | | | | |
|---|---|---|---|---|---|---|---|---|---|---|---|---|---|---|---|---|
| 30KHz | Slot 0 | | | | | | | | Slot 1 | | | | | | | |
| 60KHz | Slot 0 | | | | Slot 1 | | | | Slot 2 | | | | Slot 3 | | | |
| 120KHz | 0 | | 1 | | 2 | | 3 | | 4 | | 5 | | 6 | | 7 | |
| 240KHz | 0 | 1 | 2 | 3 | 4 | 5 | 6 | 7 | 8 | 9 | 10 | 11 | 12 | 13 | 14 | 15 |

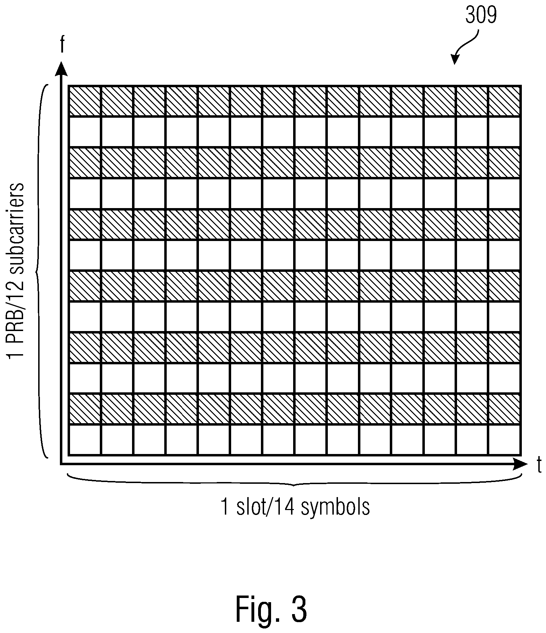

As also illustrated in Fig. 2, for a subcarrier spacing of 30 kHz, one subframe 204 is subdivided into two slots, whereas for a subcarrier spacing of 240 kHz, one subframe 204 is subdivided into 16 slots 206. Each of the slots 206 is subdivided into 14 symbols 208. Fig. 3 illustrates an example of a resource grid 309 of one slot in time domain and one physical resource block, comprising 12 subcarriers, in frequency domain.

The wireless communication system illustrated in Fig. 1 may be any single-tone or multicarrier system using frequency-division multiplexing, like orthogonal frequency-division multiplexing, OFDM, or orthogonal frequency-division multiple access, OFDMA, or any other IFFT-based signal with or without CP, e.g. DFT-s-OFDM. Other waveforms, like non-orthogonal waveforms for multiple access, e.g. filter-bank multicarrier, FBMC, generalized frequency division multiplexing, GFDM, or universal filtered multi carrier, UFMC, may be used. The wireless communication system may operate, e.g., in accordance with the LTE-Advanced pro standard, or the 5G or NR, New Radio, standard, or the NR-U, New Radio Unlicensed, standard.

The wireless network or communication system depicted in Fig. 1 may be a heterogeneous network having distinct overlaid networks, e.g., a network of macro cells with each macro cell including a macro base station, like base stations gNB$_1$ to gNB$_5$, and a network of small cell base stations, not shown in Fig. 1, like femto or pico base stations. In addition to the above described terrestrial wireless network also non-terrestrial wireless communication networks, NTN, exist including spaceborne transceivers, like satellites, and/or airborne transceivers, like unmanned aircraft systems. The non-terrestrial wireless communication network or system may operate in a similar way as the terrestrial system described above with reference to Fig. 1, for example in accordance with the LTE-Advanced Pro standard or the 5G or NR, new radio, standard.

In mobile communication networks, for example in a network like that described above with reference to Fig. 1, like an LTE or 5G/NR network, there may be UEs that communicate directly with each other over one or more sidelink, SL, channels, e.g., using the PC5/PC3 interface or WiFi direct. UEs that communicate directly with each other over the sidelink may include vehicles communicating directly with other vehicles, V2V communication, vehicles communicating with other entities of the wireless communication network, V2X communication, for example roadside units, RSUs, or roadside entities, like traffic lights, traffic signs, or pedestrians. An RSU may have a functionality of a BS or of a UE, depending on the specific network configuration. Other UEs may not be vehicular related UEs and may comprise any of the above-mentioned devices. Such devices may also communicate directly with each other, D2D communication, using the SL channels.

In a wireless communication network, like the one depicted in Fig. 1, it may be desired to locate a UE with a certain accuracy, e.g., determine a position of the UE in a cell. Several positioning approaches are known, like satellite-based positioning approaches, e.g., autonomous and assisted global navigation satellite systems, A-GNSS, such as GPS, mobile radio cellular positioning approaches, e.g., observed time difference of arrival, OTDOA, and enhanced cell ID, E-CID, or combinations thereof.

It is noted that the information in the above section is only for enhancing the understanding of the background of the invention and, therefore, it may contain information that does not form prior art that is already known to a person of ordinary skill in the art.

US 2020/0225309 A1 discloses techniques for muting positioning reference signals, according to which a location server sends, to a UE, a plurality of positioning reference signal configurations and one or more positioning reference signal muting configurations associated with a transmission-reception point (TRP) identifier (ID) and/or a positioning reference signal ID. A first TRP sends, to the UE, a command triggering at least one positioning reference signal muting configuration, and mutes positioning reference signals according to the triggered positioning reference signal muting configurations.

US 2018/0217228 A1 discloses methods for aiding a mobile device in the acquisition of positioning reference signals, according to which an offset parameter is transmitted, which indicates a difference in timing between transmission of a difference in timing between a first PRS positioning occasion for a reference cell and a second positioning occasion for a neighboring cell.

US 2020/0351618 A1 discloses a method of measuring a position of a UE in a wireless communication network, according to which a UE receives from a base station a configuration information including information about at least one PRS resource set including at least one PRS resource for receiving a PRS. The method includes receiving the PRS based on the PRS configuration information and performing a position measurement of the UE based on the received PRS.

US 2017/0111880 A1 discloses a method for performing positioning by a terminal in a wireless communication system including: receiving assistance data including reference cell information and neighboring cell information from a serving base station; receiving a positioning reference signal from each of a reference cell and at least one neighboring cell based on the received assistance data; measuring a reference signal time difference for the reference cell of at least one neighboring cell by using the received positioning reference signal; and reporting the measured RSTD to the serving base station.

Starting from the above, there may be a need for improvements or enhancements with regard to the localization of an entity, like a user device, in a wireless communication system or network.

SUMMARY

The invention is defined by the appended claims.

Embodiments of the present invention are now described in further detail with reference to the accompanying drawings, among which:

Fig. 1    illustrates an example of a terrestrial wireless network,

Fig. 2    illustrates an example of a scheme for radio frame subdivision,

Fig. 3    illustrates an example of a slot resource grid,

Fig. 4    illustrates examples of network entities in a wireless communication network,

Fig. 5    illustrates an example of a wireless communication network,

Fig. 6    illustrates an example of a user device for a wireless communication network,

Fig. 7    illustrates an example of a network entity for a wireless communication network,

Fig. 8    illustrates an example of a O-PRS configuration for an AOD scenario,

Fig. 9    illustrates an example of a O-PRS configuration for a TDOA a scenario,

Fig. 10    illustrates an example of a periodic O-PRS configuration,

Fig. 11    illustrates an example of a time offset,

Fig. 12    illustrates an example of a PRS periodicity,

Fig. 13    illustrates an example of a O-PRS transmission from a N-TRP,

Fig. 14    illustrates an example of a O-PRS transmission from a S-TRP,

Fig. 15    illustrates an example of a semi-persistent O-PRS configuration,

Fig. 16    illustrates examples of LMF-based O-PRS configuration and activation/deactivation procedures,

Fig. 17    illustrates intra- and inter-band configurations of O-PRS resources,

Fig. 18    illustrates an example of temporally aligned first and second radio resources,

Fig. 19    illustrates an example of a computer system on which units or modules as well as the steps of the methods described in accordance with the inventive approach may execute.

In the following, embodiments are discussed in detail, however, it should be appreciated that the embodiments provide many applicable concepts that can be embodied in a wide variety of wireless communication networks. The specific embodiments discussed are merely illustrative of specific ways to implement and use the present concept, and do not limit the scope of the embodiments. In the following description, a plurality of details is set forth to provide a more thorough explanation of embodiments of the disclosure. However, it will be apparent to one skilled in the art that other embodiments may be practiced without these specific details. In other instances, well-known structures and devices are shown in form of a block diagram rather than in detail in order to avoid obscuring examples described herein. In addition, features of the different embodiments described herein may be combined with each other, unless specifically noted otherwise.

In the following description of embodiments, the same or similar elements or elements that have the same functionality are provided with the same reference sign or are identified with the same name, and a repeated description of elements provided with the same reference number or being identified with the same name is typically omitted. Hence, descriptions provided for elements having the same or similar reference numbers or being identified with the same names are mutually exchangeable or may be applied to one another in the different embodiments.

In a wireless communication system or network, like the one described above with reference to Fig. 1, uplink and/or downlink methods for the localization or positioning of a user device, UE, may be employed. For example, uplink positioning methods such as uplink time difference of arrival (UL-TDOA) use a sounding reference signal (SRS) as the uplink reference signal for estimating parameters such as time difference of arrival (TDOA), round trip time (RTT), Angle of Arrival (AoA). Downlink Positioning methods use a positioning reference signal (PRS) as the downlink reference signal for estimating parameters such as downlink time difference of arrival (TDOA, DL-TDOA), Angle of Arrival (AoD). Round trip time (RTT) is an approach that may rely on both DL and UL RSs.

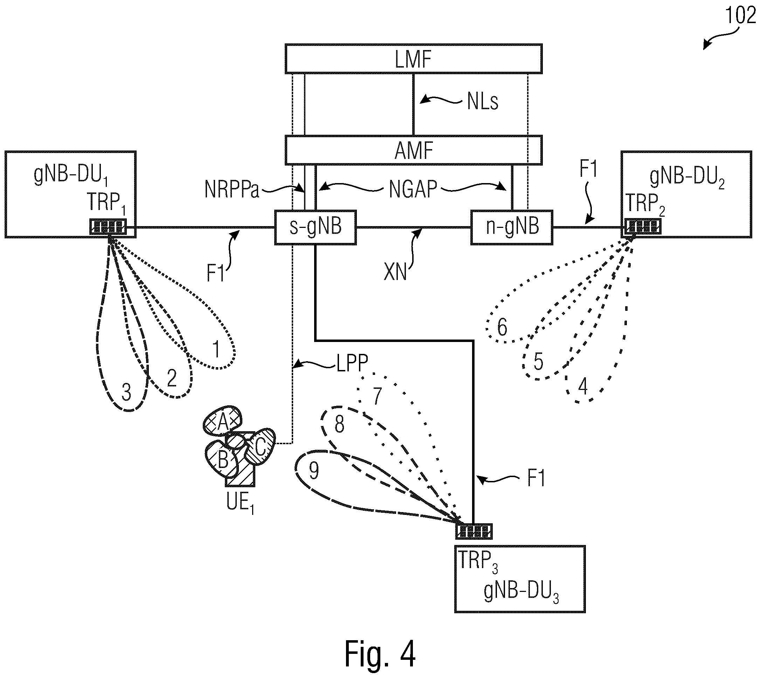

Fig. 4 illustrates network entities which may be involved in computing the position of a UE, like UE1, and the interfaces between the UE and the other network entities. Fig. 4 illustrates a wireless communication network, like the one described with reference to Fig. 1, including the core network and the RAN implemented, e.g., as cloud RAN, C-RAN. In Fig. 4 those entities are illustrated that are involved in the process for determining a location or position of the UE1. The core network 102 includes the location management function, LMF, and the Access and Mobility Management Function, AMF, which communicate using the Network Layer Signaling protocol, NLs. The RAN includes the distributed units gNB-DU1, gNBDU2 and gNB-DU3 connected via the F1 interface to the respective central units s-gNB and n-gNB, which, in turn, are connected via the XN interface. Further, the central units s-gNB and n-gNB are connected to the AMF of the core network 102 via the Next Generation Application Protocol, NGAP. Each of the distributed units gNB-DU1, gNBDU2 and gNB-DU3 includes a transmission reception point TRP1, TRP2 and TRP3, e.g., one or more antennas or antenna arrays. In examples, the respective distributed units gNB-DU1, gNBDU2 and gNB-DU3 may apply beamforming so that the associated transmission reception point transmits/receives using a beam directed in a specific direction, like beams 1, 2 or 3 of distributed unit gNB-DU1, beams 4, 5 or 6 of distributed unit gNBDU2 and beams 7, 8 or 9 of distributed unit gNB-DU3. For example, in Fig. 4, during the positioning process for determining the position of UE1, the beams 1 to 9 are respective transmit beams at the distributed units or base stations for transmitting PRSs. In turn, UE1 turn, may apply or use different spatial domain receive filters across multiple PRS resources so as to receive PRSs from directions described by one of beams A, B and C.

For determining the position of a UE, the following classes of positioning methods according to 3GPP, Rel. 16 may be employed:

1. UE-assisted, LMF-based, where the positioning solution is computed at the LMF based on measurement reports from the UE.
2. UE-based, where the UE receives assistance data to run computation at the UE.
3. NG-RAN node assisted, where the positioning solution is computed at the LMF based on measurement reports from the NG-RAN node.

The PRS signals in Rel-16 are considered "always-on" signals. For AoD, narrower beams would improve the direction estimation accuracy while for TDOA and RTT wider beams are sufficient and can achieve a higher coverage. In the case of an always-on narrow beam PRS resource configuration there is a clear waste of energy, overhead and air resources. One way to configure a periodic PRS resource with low overhead will be by setting a very high period between the PRS resources: the drawback of this approach that channel will vary due a UE position/orientation change and hence the PRS resources are not effiecient in terms of AoD accuracy.

Radio resources to be used by a TRP for transmitting a PRS may be defined in a PRS resource configuration. For example, a DL-PRS Resource Set is defined as a set of DL-PRS resources where each resource has a DL-PRS Resource ID. The DL-PRS Resources in a DL-PRS resource set are associated with the same TRP or frequency layer. Each DL-PRS Resource ID in the DL PRS Resource Set can be associated with a specific beam for beamforming. A TRP may be configured with multiple PRS Resource Sets.

For example, resources and resource sets for PRS may be configured as defined in TS 38.214 section 5.1.6.5. According to this scheme, the UE expects that it will be configured with *dl-PRS-ID-r16* each of which is defined such that it is associated with multiple DL PRS resource sets from the same cell. The UE expects that one of these *dl-PRS-ID-r16* along with a *nr-DL-PRS-ResourceSetId-r16* and a *nr-DL-PRS-ResourceId-r16* can be used to uniquely identify a DL PRS resource. A DL PRS resource set consists of one or more DL PRS resources and it is defined by multiple parameters. The Information Element *dl-PRS-Periodicity-and-ResourceSetSlotOffset-r16 is a mandatory field and* defines the DL PRS resource periodicity per DL-PRS Resource Set. All the DL PRS resources within one DL PRS resource set are configured with the same DL PRS resource periodicity. Further, a DL PRS positioning frequency layer is defined as a collection of DL PRS resource sets that have common parameters configured by *nr-DL-PRS-PositioningFrequencyLayer-r16.* Always-on reference signals are signals which, once configured, are always transmitted in certain time positions. In NR, always-on signals are only defined for the synchronization signal block (SSB) and PRS. Always-On RSs can be regarded as periodic but not all periodic RS are always-on. Further known concepts for PRS refer to PRS transmissions that can be activated upon request from UE. This approach is regarded as user specific and requires UE measurements to be reported to the network for configuring a reference signal. Other PRS configurations can temporarily increase the PRS resources in a given area and time instance. This approach is a configuration option within the always-on procedure. R2-2007128 proposes an On-Demand PRS triggered upon request from UE and is associated with the concept of transmitting PRS only on a subset of beams originating from a given transmission point. The on-demand procedure requires feedback sent from the UE to the LMF regarding the cell resources across multiple cells that the UE can listen to. R2-2007128 proposes a Dynamic PRS management refers to a mechanism which allows TRPs to temporarily deactivate a given set of PRSs, following proper configuration. According to TS38.214 Section 5.1.6.1.3, the UE is configured with an associated SSB where the associated SSB is a DL-RS and includes an SSN index. The association indicates a cell timing relation related to the associated SSB where the UE should base its cell timing on. This means, whether the UE derives the cell timing from a neighboring cell or not to process a CSI-RS for mobility is subject to the associated SSB: If a UE is configured with the higher layer parameter *CSI-RS-Resource-Mobility* and the higher layer parameter *associatedSSB* is not configured, the UE shall perform measurements based on *CSI-RS-Resource-Mobility* and the UE may base the timing of the CSI-RS resource on the timing of the serving cell. If a UE is configured with the higher layer parameters *CSI-RS-Resource-Mobility* and *associatedSSB,* the UE may base the timing of the CSI-RS resource on the timing of the cell given by the *cellId* of the CSI-RS resource configuration.

The present invention aims for providing a concept for an efficient allocation of PRS resources which allows for an accurate position measurement of a user device. Embodiments of the present invention are based on the idea, that an improved trade-off between resource efficiency and positioning accuracy in a position measurement of a user device may be achieved by activating or deactivating, in response to a certain event, a transmission and/or a measurement of a second reference signal on second radio resources in addition to, or instead of, a first reference signal which is transmitted using first radio resources. For example, the first radio resources may be periodic in time and the first reference signal may be referred to as periodic PRS. As the second reference signal is activated or deactivated in response to a certain event, it may be referred to as occasional PRS. In embodiments, a user device may be configured or preconfigured for measuring the second radio resources upon activation, wherein, for example, the configuration of the user device may be provided by the core network or another network entity such as a TRP. Thus, there may be no requirement for the user device to request a transmission of an additional PRS. Rather, transmission and/or measurement of the second reference signal may be performed in response to defined events or occasions, for example defined positioning procedures.

Transmitting the second reference signal on the second radio resources increases a number of reference signals which may be transmitted within a defined time period. As the user device may be subject to movement, a position measurement using reference signals within a short time period may yield a higher accuracy than a position measurement using reference signals distributed over a long time. However, by activating and deactivating the second reference signal, the transmission of a high number of reference signals may be limited to a short time period, so as to limit the exploitation of radio resources.

In embodiments, the second radio resources may be configured independently from the first radio resources, so that the second radio resources are not necessarily subject to limitations in the configuration of the first radio resources. Thus, having the second radio resources in addition to the first radio resources enhances the flexibility for the configuration of radio resources for positioning measurements.

Embodiments of the present invention may be implemented in a wireless communication system as depicted in Fig. 1 including TRPs and UEs, like mobile terminals or IoT devices.

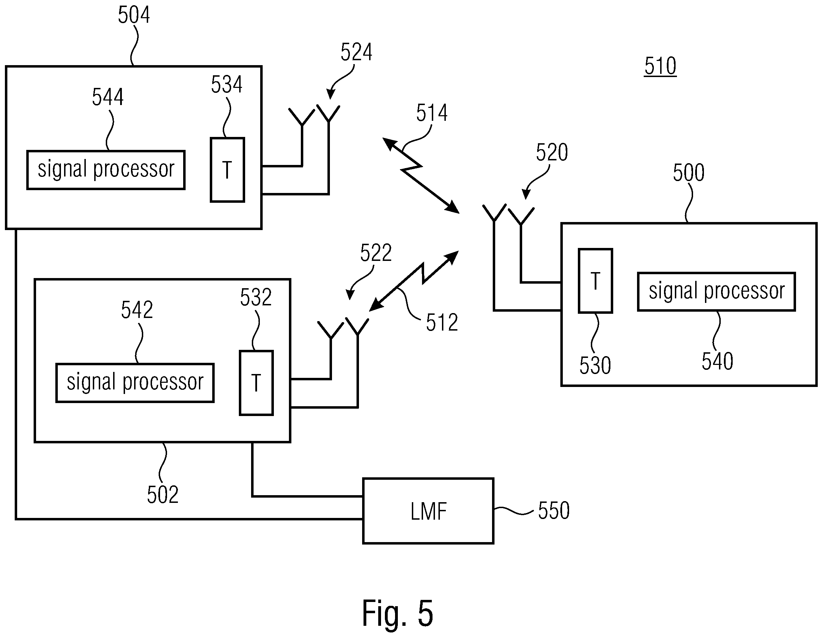

Fig. 5 is a schematic representation of a wireless communication system 510, for example a wireless communication system like the one described with respect to Fig. 1. The wireless communication system 510 includes a user device 500, for example a mobile user device, and a transmission reception point (TRP) 502. Optionally, the wireless communication system 510 may include a further TRP 504. The user device 500 may communicate with the TRP 502 via a wireless communication link or channel 512, and optionally with the further TRP 504 via a wireless communication link or channel 514. The user device 500 includes one or more antennas 520 or the one or more antenna arrays having a plurality of antenna elements, a transceiver 530 and a signal processor 540 coupled with each other. The one or more TRPs 502, 504 each include one or more antennas 522, 524 or one or more antenna arrays having a plurality of antenna elements, a transceiver 532, 534 and a signal processor 542, 544. The wireless communication system 510 further comprises a LMF 550 which may be part of a core network of the wireless communication system. The LMF 550 is connected with the TRPs 502, 504. For determining a position of the user device 500, a position measurement between the user device 500 and one or more of the TRPs 502, 504 may be performed. For example, the TRP 502 may transmit a positioning reference signal, PRS, using radio resources which may be allocated for PRS according to a configuration. For example, the configuration for the PRS may be provided by the LMF 550. The user device 500 may measure the radio resources configured for PRS. For example, the user device 500 may measure a received signal strength on the PRS radio resources or a time of arrival of the PRS transmitted on the PRS radio resources. A position measurement may include measurements on PRS transmitted from different TRPs, for example TRP 502 and TRP 504. A position measurement may also include measurements of multiple PRS transmitted by one TRP. For example, the TRP 502 may direct each of a plurality of PRS towards different directions using beamforming. In further examples, the user device transmits a reference signal, for example a sounding reference signal, SRS, and one or more of the TRPs 502, 504 may measure the reference signals transmitted by the user device 500. The system or network of Fig. 5, the UE 500, the TRPs 502, 504 and the LMF 550 may operate in accordance with the inventive teachings described herein. For example, the TRP 502 may be a serving TRP of the user device 500. For example, the UE 500 may be a RRC connected state with the TRP 502. The TRP 504 may in examples three present a non-serving TRP. In examples, a timing of the UE 500 may not be synchronized with the TRP 504.

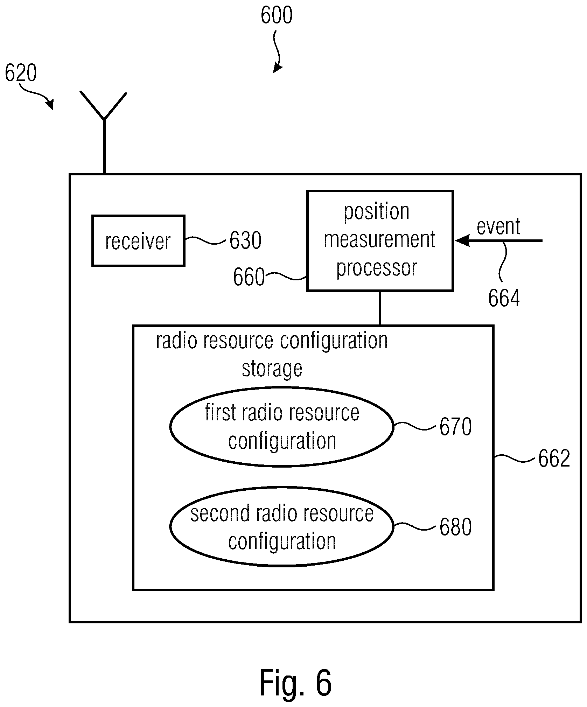

According to an embodiment, a wireless communication system, e.g. the system 510 described with respect to Fig. 5, comprising a first transmission point, e.g. a TRP 502, and a second transmission point, e.g. TRP 504, is for performing a position measurement of a user device, e.g. apparatus 500, being in a serving connection with the first transmission point (e.g. the first transmission point is a serving TRP of the user device), the position measurement being for determining the position of the user device. According to this embodiment, the first transmission point is for transmitting, for the position measurement, one or more first reference signals on one or more first radio resources, and the second transmission point is for transmitting, for the position measurement, one or more second reference signals on one or more second radio resources. Further, the user device is to activate or deactivate, in response to a certain event, a measuring of the second radio resources in addition to, or instead of, the first radio resources for the position measurement. According to an embodiment, the user device is the apparatus 500, 600 according to Fig. 5 or 6.

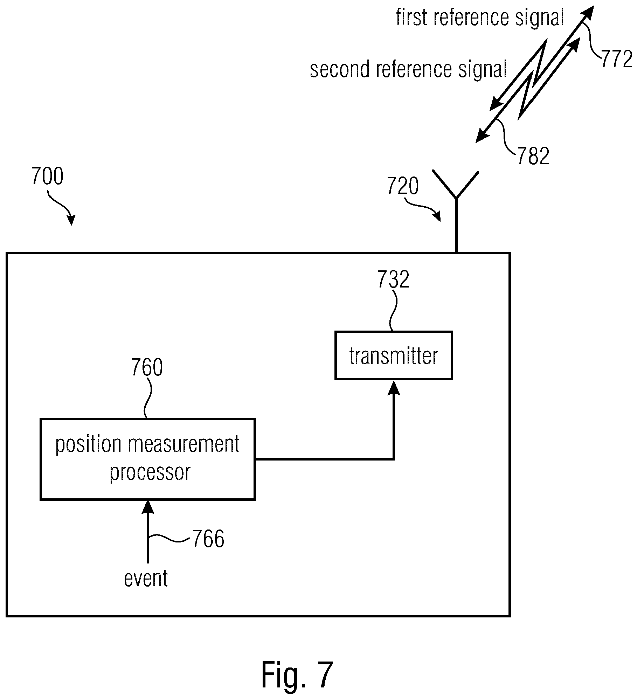

According to an embodiment, the first transmission point is the apparatus 502 according to Fig. 5 and/or is implemented in accordance with apparatus 700 of Fig. 7. Additionally or alternatively, the second transmission point is the apparatus 504 according to Fig. 5 and/or is implemented in accordance with apparatus 700 of Fig. 6.

Optionally, the wireless communication comprises an LMF apparatus, e.g. the LMF-apparatus 550 according to Fig. 5.

According to an embodiment, the user device is for activating or deactivating the measuring of the second radio resources in dependence on a timing information about the first radio resources and the second radio resources.

According to an embodiment, the second transmission point is to activate or deactivate a transmission of the second reference signals in response to a respective indication. For example, the LMF-apparatus or the first transmission point may provide the respective indication.

An embodiment provides a method for operating a wireless communication system (510), the method comprising a step of performing a position measurement of a user device (500) being in a serving connection with a first transmission point of the wireless communication system, the position measurement being for determining the position of the user device; a step of transmitting, by means of a first transmission point, one or more first reference signals on one or more first radio resources; a step of transmitting, by means of a second transmission point, one or more second reference signals on one or more second radio resources, and a step of activating or deactivating a measuring of the second radio resources by the user device in addition to, or instead of, the first radio resources for the position measurement.

Embodiments of the present invention provide a non-transitory computer program product comprising a computer readable medium storing instructions which, when executed on a computer, perform any of the described methods.

Fig. 6 illustrates an apparatus 600 for a wireless communication network according to an embodiment of the present invention. For example, the apparatus 600 is a user device, UE, like the user device 500 described with respect to Fig. 5. The apparatus 600 comprises one or more antennas 624 receiving a radio signal. For example, the apparatus 600 may communicate via a communication channel, e.g. the channels 512, 514 of Fig. 5, with the one or more base stations or TRPs of the wireless communication network. The apparatus 600 comprises a position measurement processor 660 and further comprises a radio resource configuration storage 662. The radio resource configuration storage 662 holds, at least temporarily, a first radio resource configuration 670 for one or more first radio resources and a second radio resource configuration 680 for one or more second radio resources. The apparatus may comprise a receiver 630, which may be part of a transceiver, for measuring radio resources using the one or more antenna 620, e.g. so as to receive a signal transmitted on the measured radio resources. For a position measurement, the apparatus 600 measures one or more of the first radio resources and one or more of the second radio resources. The position measurement processor 660 is to activate or deactivate, in response to a certain event 664, a measuring of the second radio resources in addition to, or instead of, the first radio resources for the position measurement.

The apparatus 600 may be preconfigured with the first radio resource configuration 670 and/or the second radio resource configuration 680. In other examples, the apparatus 600 may receive the first radio resource configuration 670 and/or the second radio resource configuration 680.

A measuring of one or more radio resources, for example the first radio resources or the second radio resources, may include a determination of a received intensity or a received power on the measured radio resources, or a determination of one of a received intensity a received power, a time of arrival, and an angle of arrival of a reference signal transmitted on the measured resources. For example, the apparatus 600 is to determine a measurement information including one or more of these quantities based on a measurement of one or more radio resources.

Fig. 7 illustrates an apparatus 700 for a wireless communication network according to an embodiment of the present invention. For example, the apparatus 700 is a TRP, like examples of the network entity 502 described with respect to Fig. 5. The apparatus 700 comprises one or more antennas 720 four transmitting a radio signal. The apparatus 700 further comprises a position measurement processor 760, which is configured or preconfigured to transmit, for a position measurement of a network entity of the wireless communication network, such as a user device like the apparatus 600, one or more first reference signals 772 and the one or more second reference signals 782. The apparatus 700 is to transmit the first reference signals 772 on first radio resources, and the second reference signals 782 on second radio resources. The position measurement processor 760 is to activate or deactivate, in response to a certain event 766, a transmission of the one or more second reference signal in addition to, or instead of, the one or more first reference signals for the position measurement. For example, the apparatus comprises a transmitter 732, which may part of the transceiver, for transmitting the one or more first reference signal 772 and the one or more second reference signals 782.

As the transmission of the second reference signals on the second radio resources may be activated or deactivated in response to the certain event 766, the second reference signal for the position measurement may be referred to as occasional positioning reference signal, O-PRS. Accordingly, the second radio resources may be referred to as O-PRS resources. In contrast, as the first reference signals may, for example, be always-on reference signals, which may be transmitted periodically, the first reference signals may be referred to as periodic PRS, or just PRS. In general, radio resources may be referred to as resources.

For example, the O-PRS are transmitted by one or more TRPs on defined occasions (time and frequency resources) and are not always-on reference signals. O-PRS may be used to enable a positioning method relying on a measurement from a DL RS (downlink reference signal) such as AoD, RTT or DL-TDOA as described before. Unlike CSI-RS, occasional PRS are not necessarily UE specific and the transmitted DL- O-PRS resources from multiple TRPs can be received by the same UE (i.e. not from the serving cell). In the case of non-serving cell RSs, the association decision as well as activation/deactivation and the related procedure cannot be performed by the serving cell for a DL-RS transmitted from a TRP different from the serving TRP.

In examples, both PRS and O-PRS are configured by the network, e.g. by the LMF. In this case, the PRS and O-PRS may be expected not to have identical resource configuration. One or more of the following can distinguish the configuration of O-PRS from a PRS configuration:

- Tracking rate:

  o Higher periodicity for O-PRS to support certain measurements like phase tracking.

- Time and frequency domain location

  ∘ 5G allows a flexible mapping for the resource elements over the subcarriers and OFDM symbols with defined constraints. The O-PRS can have a narrower or wider bandwidth, different number of OFDM symbols depending on the targeted enhancement for coverage or accuracy targeted from an O-PRS configuration

  o For O-PRS, the interference assumptions can be relaxed. This enables to use higher densities like a Comb1 configuration.

- Beam characteristics

- Number of antenna ports

For example, in a wireless communication network, like the one described in Fig. 5, a network entity such as one of the TRPs 502, 504, for example the apparatus 700 of Fig. 7, or the LMF 550, may provide a downlink reference signal (DL-RS) resource configuration and a O-PRS configuration to a user device such as the UE 500, for example the apparatus 600 of Fig. 6. For example, the DL-RS resource configuration may comprise a PRS configuration, for example the first radio resource configuration 670. The network entity may additionally provide a O-PRS configuration, for example the second radio resource configuration 680, to the user device. In examples, a configuration message provided to the user device identifies an O-PRS resource to be measured by indicating a resource ID referring to one or more resources within a PRS resource set. In other words, the configuration message for measuring and O-PRS resource is identified with a resource ID within a PRS resource set.

Accordingly, the first radio resources configured by the first radio resource configuration 670 may be for a transmission of a first reference signal, which may e.g. be a DL-PRS or a SSB. The second radio resources may be associated with one or more of the first radio resources. For example, the second radio resource configuration 680 may reference one or more of the first radio resources for configuring the second radio resources, e.g. by means of a resource ID. Thus, a timing, e.g. a time frame or slot or one or more symbols, and/or a frequency range for the second radio resources may be defined with respect to one or more associated first radio resources.

In other words, in examples, the O-PRS configuration is associated with the configuration of a DL-RS which may be identified with a resource ID. For example, for measuring the O-PRS, the user device may measure radio resources within a search window. For example, based on a time frame or time slot or symbol, for example as explained with respect to Fig. 2, indicated for the O-PRS within the O-PRS configuration, the user device expects the O-PRS to arrive within a search window around the indicated time period. The O-PRS search window may be associated with the DL-RS identified by the resource ID. In examples, the DL-RS configuration may comprise a timing offset. The timing offset may describe an offset between a timing of the TRP, e.g. TRP 504, which is to transmit the O-PRS, and a serving PRS, e.g. TRP 502, of the user device, e.g. user device 500. For example, the timing offset configured in the DL-RS may be used for the O-PRS. In other words, if configured, the timing offset configured in DL-RS is associated with respect to the DL-RS regardless of the serving cell timing.

In examples, the user device may measure selected O-PRS resources, e.g. selected O-PRS resources of the resources defined in the O-PRS configuration. The selection may be determined on the basis of the DL-RS which is associated with the configuration message (e.g. the configuration message for the first radio resources). For example, the selection is based on a resource set ID or frequency layer ID or TRP ID of the associated DL-RS.

For example, a UE action related to an O-PRS, for example a measurement of an O-PRS, is determined based on a measurement by the UE on the DL-RS which is associated with the O-PRS. That is, the UE measurement on the O-PRS may be triggered by a UE measurement on one or more DL-RSs based on a network configuration message. Thus, for example, the configuration of the O-PRS is not determined based on information on the DL-RS reported by the UE.

In examples, no feedback sent from the UE to the LMF is required regarding the cell resources across multiple cells that the UE can listen to.

In examples, for each O-PRS, one associated DL-RS can be configured.

For example, the DL-RS can be a DL-PRS (NR), PRS (LTE) or an SSB.

In examples, the O-PRS comprises resources within a O-PRS resource set. The O-PRS resource set may be different from the DL-RS resource set of the associated DL-RS resource.

In examples, the O-PRS resource set is identified by a mode.

In examples, the O-PRS resource set may be identified by a periodic, aperiodic, or semi-persistent (SP) resource set configuration.

In examples, the O-PRS resource configuration can include a time relation with the associated DL-RS (for periodic and SP).

In the examples of aperiodic or semi-persistent O-PRS, the O-PRS resource set may be identified by aperiodic resource set configuration that can be activated or deactivated via a higher layer parameter. That is, for example, the event 664 may correspond to a reception of higher-level signaling, signaling the higher layer parameter.

In examples, the O-PRS measurements are associated with a frequency layer, TRP ID, or a resource set. For example, the O-PRS may correspond to, or be transmitted by, a neighboring TRP, for example a non-serving TRP.

O-PRS configurations

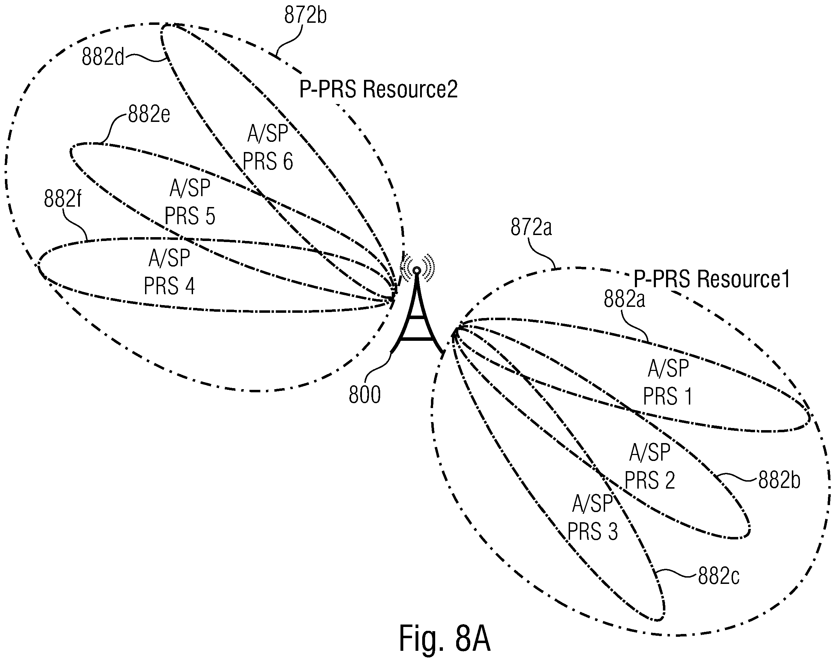

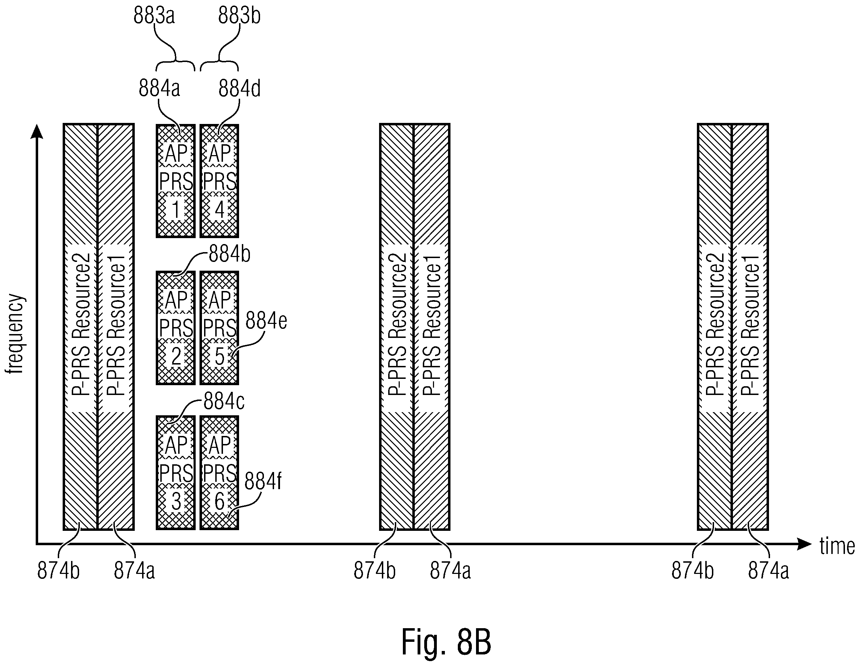

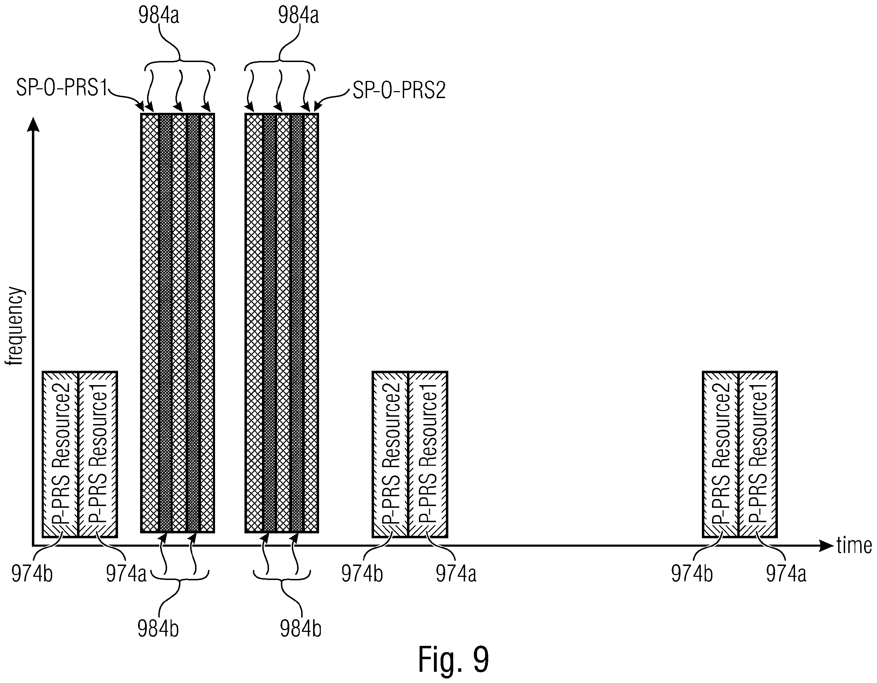

The O-PRS may be configured to optimize a positioning method performance such as ToA based or direction based methods. In Fig. 8 and Fig. 9 an example configuration is shown, which may be particularly beneficial for AoD and TDOA or RTT methods, respectively.

Fig. 8 illustrates an AoD scenario and an example of a corresponding O-PRS configuration according to an embodiment. It is noted however that the O-PRS configuration described with respect to Fig. 8 may be used independent of AoD. Fig. 8a illustrates a TRP, for example like the apparatus 700 of Fig. 7. The TRP 800 is configured for transmitting a first periodic PRS 872a and a second periodic PRS 872b, for example using a first antenna and a second antenna, respectively, so that the periodic PRS 872a, 872b may be directed towards different directions. The periodic PRS 872a, 872b may be examples for the first reference signal 772 of Fig. 7. A beam width of the periodic PRS 872a, 872b may be rather broad. Fig. 8b shows a time frequency diagram illustrating radio resources for the PRS illustrated in Fig. 8a. The periodic PRS 872a, 872b are transmitted periodically on periodic radio resources, for example first radio resources. The periodic PRS may be always on. The TRP 800 is further configured for transmitting O-PRSs 882a-f. The O-PRS 882a-c may be transmitted using the first antenna. Each of the O-PRS 882a-c may be directed towards a different direction, for example by applying beamforming using different spatial filters for transmitting the respective O-PRSs. For example, the respective angles of departure of the O-PRSs 882a-c may be distributed within a field of view of the first periodic PRS 872a. Correspondingly, the O-PRS 882d-f may be transmitted using the second antenna and within a field of view of the second periodic PRS 872b. For example, the O-PRS 882a-c are associated with the periodic PRS 872a, and the O-PRS 882d-f are associated with the periodic PRS 872b. The O-PRS 882a-f may have a lower beamwidth than their associated periodic PRS. The O-PRS 882a-f may be transmitted on respective O-PRS resources 884a-f, as illustrated in Fig 8b. The O-PRS resources may correspond to second radio resources, like the ones configured by the second radio resource configuration 680 of Fig. 6.

As the O-PRS 882 are directed towards different directions, a user device may perform an AoD measurement on the O-PRS resources. For that purpose, the user device may measure received intensities on the O-PRS resources. A small a beamwidth of the O-PRSs used for an AoD position measurement may result in a high measuring precision. In other words, the TRP transmits a number of PRS resources, e.g. O-PRS resources 882a-f, with different azimuth and elevation scanning angles. For AoD, since the number of PRS resources transmitted over multiple beams can be high (especially for high frequencies): using always on signal like PRS will be a waste of resources because AoD will require a high update rate and multiple beam direction for the PRS resources. The AoD approach relies on RSRP from different beams, the narrower the beam the better the AoD estimate will be. Consequently, it is beneficial to activate the O-PRSs 872 for a certain event. Such a certain event, like the event 766 of Fig. 7, may be an initialization of a position measurement, for example a high precision position measurement.

In examples, the radio resources for the transmission of the O-PRSs which are associated with the one periodic PRS (or alternatively another reference signal), for example the O-PRSs 882a-c which are associated with the periodic PRS 872a, are part of a set of O-PRS resources, which may be referred to as a set of second radio resources. In Fig. 8b, the O-PRS resources 884a-c may form, or may be part of a set 883a of O-PRS resources. Accordingly, the O-PRS resources 884d-f may form, or may be part of a set 883b of O-PRS resources associated with the second periodic PRS 872b and the corresponding periodic PRS resources 874b. In the example of Fig. 8B, the O-PRS resources of one set of O-PRS resources are within the same time period, for example the same time frame or time slot or symbol. Thus, the user device may measure the O-PRS resources of one set of O-PRS resources simultaneously. Such an arrangement of the O-PRS resources may provide for a very precise position measurement, as a movement of the user device may have a particularly low impact on the position measurement.

For example, as shown in Fig. 8B, the sets 883a, 883b of O-PRS resources follow their respective associated periodic PRS resources 874a, 874b. For example, the configuration of the O-PRS resources, like the second radio resource configuration 680 of Fig. 6, may indicate a time offset between the O-PRS resources and their associated periodic PRS resources. Thus, the user device may infer, from a time of arrival of the associated periodic PRS 872a, 872b, the time of arrival of the O-PRS 882a-c, 882d-f.

In examples, only one instance of the O-PRSs 872a-f is transmitted, e.g. after activating the measurement of the O-PRS by the UE. Accordingly, the O-PRS may be referred to as aperiodic (AP) or as semi-persistent.

In examples, the user device may infer its coarse orientation with respect to the TRP from a measurement of the periodic PRS resources, and may perform a measurement on the O-PRS resources accordingly. As for example illustrated in Fig. 4, a UE may comprise multiple antenna, indicated as antenna A, B, C in Fig. 4, the shove which may be directed towards a different direction. The UE may measure the periodic PRS resources on multiple of the antennas, and may select the antenna yielding the highest received reference signal, e.g. the highest reference signal intensity measured on the radio resources, i.e. the PRS resources, for the periodic PRS for measuring the O-PRS resources. Thus, the O-PRS resources may be measured energetically efficiently.

In the scenario according to Fig. 8, one or more user devices in a given area, e.g. around the TRP 800, may be configured, for example by the network, e.g. the LMF, to measure multiple O-PRS resources transmitted from one more TRPs. Since PRS is primary designed to support OTDOA use cases with a wide area coverage including multiple TRPs, area specific PRS designs were not in the scope of the PRS design of existing solutions.

Fig. 9 illustrates another example of an O-PRS resource configuration according to an embodiment. The O-PRS resource configuration may be particularly beneficial for a DL-TDOA measurement, for example for high accurate use cases or high mobility UEs. First periodic PRS 974a and second periodic PRS 974b are repeated periodically, similar to the first and second periodic PRS 874a, 874b. Sets 984a of first O-PRS resources each comprise a plurality of first O-PRS resources, for example a number of three as shown in Fig. 9. Sets 984d of the second O-PRS resources each comprise a plurality of second O-PRS resources, for example a number of two. For example, two sets 984a of first O-PRS resources are located temporally subsequent. For example, the O-PRS resources of one set of O-PRS resources are located in different time periods, which may be arranged periodically within the set of O-PRS resources. A frequency, with which the instances of the sets of O-PRS resources are repeated may be higher than a frequency of the periodic PRS resources 974a, 974b. As illustrated in Fig. 9, the O-PRS resources 984a, 984b may have a higher bandwidth than the periodic PRS resources 974a, 974b. The O-PRS resources 984a, 984b may be referred to as semi-persistent O-PRS resources.

In addition, the O-PRS may be be designed to accommodate for latency or to support a UE DL positioning session during a DRX.

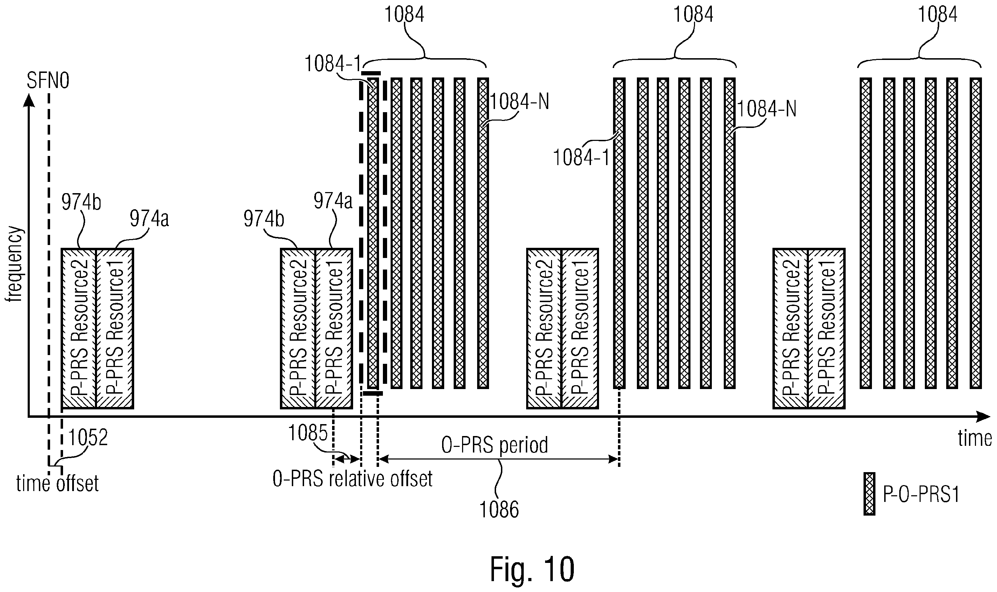

Fig. 10 illustrates an example of a periodic O-PRS resource configuration according to an embodiment. In the case of periodic O-PRS resources, a set 1084 of O-PRS resources may be repeated periodically, for example as long as the periodic O-PRS is activated. The sets 1084 of O-PRS resources may comprise a plurality of O-PRS resources 1084-1 to 1084-N. For example, the O-PRS resources 1084-1 to 1084-and may be arranged periodically within the set 1084 of O-PRS resources. A first O-PRS resource 1084-one of the set 1084 of O-PRS resources may have a temporal offset 1085 from a periodic PRS resource 974a, to which the set 1084 of O-PRS resources is associated. The sets 1084 of O-PRS resources may be repeated with the periodicity 1086. The periodicity 1086 may, for example, correspond to the periodicity of the periodic PRS resources 974a, to which the sets 1084 of O-PRS resources is associated.

For example, the periodic PRS 974a, 974b and/or the periodic O-PRS 1084 may be transmitted by a non-serving TRP court by a TRP which is different from a reference TRP. For example, the reference TRP may be a TRP which provides assistance data to the user device. For example, the user device may be synchronized with the reference TRP. A time offset 1052, which may be provided to the UE, for example by the LMF 550, for example via LPP, indicates a timing offset between the reference TRP and the TRP which is to transmit the PRS and/or the O-PRS on the resources 974a, 974b, 1084.

As described with respect to Fig. 8, Fig. 9 and Fig. 10, the network can configure the UE with O-PRS resources with desired characteristics as "narrow" beam for AoD. The configuration of the O-PRS may be associated by an always-on PRS resource or from available DL RSs like an SSB or a DL-PRS measured at the UE.

In one option, the network can provide the UE with the O-PRS resources based on a first measurement from the UE (like RSRP) on DL RSs including PRS, SSB or CSI-RS. In a second option, the network can provide the UE with the O-PRS resources based on a first report of the UE on RSRP measurements on DL RSs including PRS, SSB or CSI-RS. Since the UE cannot directly report to a neighboring TRP, the LMF or the serving TRP can provide the non-serving TRPs with the RSRP measurements needed to configure an O-PRS. The advantage of the second option is that serving more UEs with the same configured O-PRS is possible. In addition, this option reduces the latency and device efficiency due the measurements and reports that requires extra message exchange between the UE and the network.

The O-PRS configuration may be provided from the LMF over LPP interface. For low latency application, the UE may be configured with a DCI field for triggering an on demand O-PRS resource configuration. The UE may assume that the Tx power within the resources of an O-PRS resource set are constant. If not provided by a higher layer parameter, the UE may assume that the O-PRS and the associated RS have the same transmit power.

In examples, at least one of the following parameters is configured via higher layer signaling for each O-PRS resource configuration, for example for the second radio resource configuration 680 of Fig. 6: PRS resource ID, Resource Mapping, Periodicitytype, Resource Repetition factor, Time Slot Offset, Frequency resource element offset, Sequence ID, Comb size, Resource Bandwidth, Resource Power, O-PRS Muting pattern, O-PRS-startPRB, QCL Info.

In the following, timing aspects are described, which may optionally apply to the O-PRS configurations of Fig. 8, Fig. 9, Fig. 10 and all further O-PRS configurations described herein. For example, the UE 600 may make use of one or more of the described timing methods for measuring the second radio resources as defined in the second radio resource configuration 670.

For timing the measurement of the PRS resources and/or the O-PRS resources, a UE may rely on synchronization or timing information about a TRP which is to transmit the PRS or O-PRS on the resources to be measured. For example, the UE may be synchronized with a reference TRP, for example the serving TRP. For the case that the UE is to measure PRS or O-PRS of a further TRP, for example a neighboring TRP of the serving TRP, for example a non-serving TRP, the UE may be provided with information about a timing of the further TRP.

In examples, the LMF provides the UE over LPP with the information field *NR_SFN0_Offset.* This field defines the time offset of the SFN#0 slot#0 for the given TRP with respect to SFN#0 slot#0 of the assistance data reference TRP and may comprise the following subfields. For example, a SFN#0 may refer to a first radio frame of a serious of a radio frames, for example like the radio frame 204 of Fig. 2, and slot#0 may refer to the first slot, e.g. like the slots 208, of the first radio frame.

- *sfn-Offset* specifies the SFN offset at the TRP antenna location between the assistance data reference TRP and this neighbour TRP.

The offset may correspond to the number of full radio frames counted from the beginning of a radio frame #0 of the assistance data reference TRP to the beginning of the closest subsequent radio frame #0 of this neighbour TRP. *sfn-Offset* can be an integer value between 0 and 1023.

- *integerSubframeOffset* specifies the frame boundary offset at the TRP antenna location between the assistance data reference TRP and this neighbour TRP counted in full subframes. The offset is counted from the beginning of a subframe #0 of the assistance data reference TRP to the beginning of the closest subsequent subframe #0 of this neighbour TRP, rounded down to multiples of subframes. *integerSubframeOffset* can be an integer value between 0 and 9

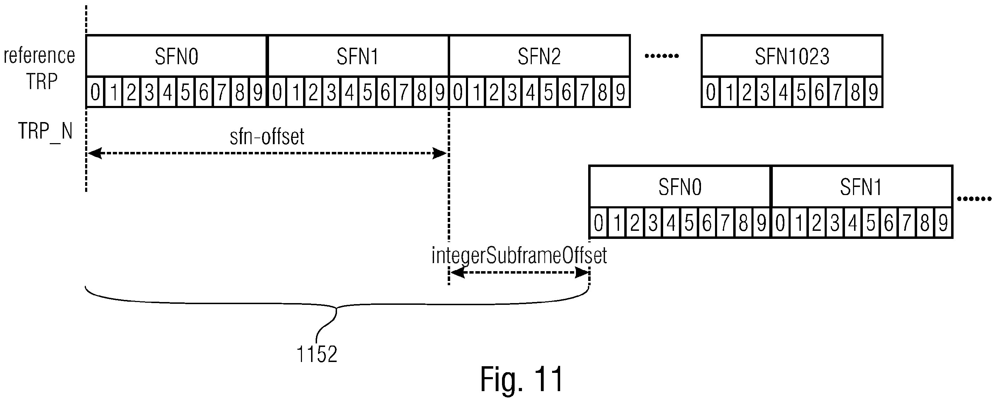

Fig. 11 illustrates an example of a time offset between a reference TRP and a non-serving TRP. In the example illustrated in Fig. 11, a time offset 1152, which may be an example of the time offset 1052 of Fig. 10, is described by an SFN offset =1 and *subframeoffset =6* which may be signaled to the UE on the timing information of TRP_N.

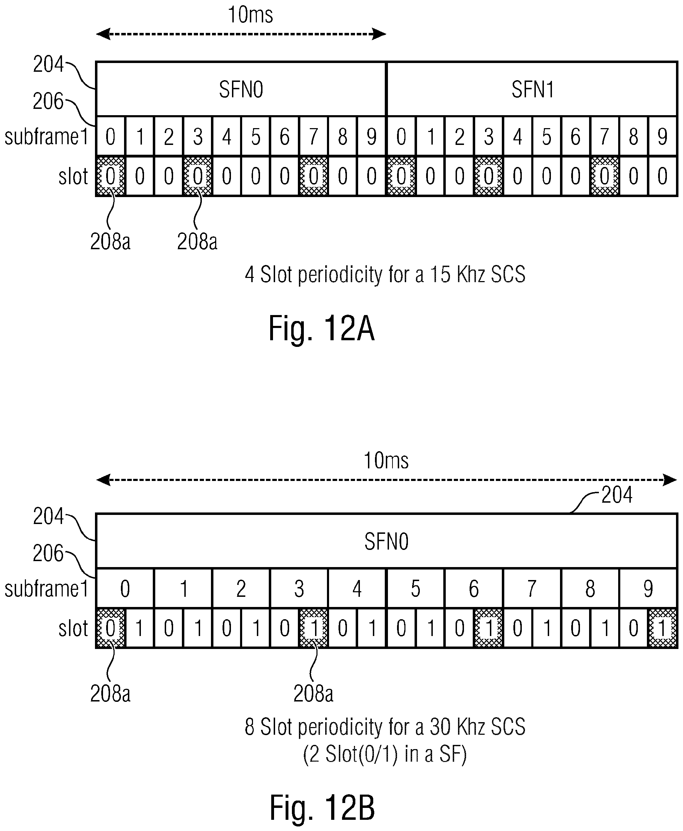

Fig. 12 illustrates examples of periodic arrangements of PRS within a radio frame. As described with respect to Fig. 2, a radio frame 204 may comprise 10 subframes 206. In the example of Fig. 12A of a subcarrier spacing of 15 kHz, each subframe 206 comprises one slot. The shown PRS configuration comprises a 4 slot periodicity of slots 208a which are configured as PRS resources. In the example of Fig. 12B of a subcarrier spacing of 30 kHz, each subframe 206 comprises two slots. The shown PRS configuration comprises a 8 slot periodicity of slots 208a which are configured as PRS resources.

In the following, different scenarios for triggering the UE to measure aperiodic O-PRS resources. The described triggering events may be examples for the certain event 664 in response to which the apparatus 600 may activate the measurement of the second radio resources, e.g. O-PRS such as aperiodic O-PRS. For example, triggering the UE may be performed via a DCI interface. Thus, the certain event 664 may correspond to a reception of a DCI message. Although explained for the example of a periodic O-PRS, the following triggering methods may equivalently be applied for periodic or semi-persistent O-PRS.

If the O-PRS to be measured by the UE is to be transmitted by a neighboring TRP (e.g. a non-serving TRP, N-TRP, also labeled TRP_N), the network (e.g. theLMF) may inform the UE about the time offset 1052, 1152 of the N-TRP with respect to a reference TRP of the UE, for example by indicating the SFN, Subframe offset of a TRP-n w.r.t. the SFNO of the reference TRP (cf. Fig. 11). The UE may use the information to align the SFNO for TRP-N on its derived SFNO from the reference TRP. In examples, the N-TRP_N has a scheduled always-on signal (PRS). For example, the TRP_N schedules an O-PRS occasion for transmission including one or more resources or resource sets. The network (e.g. the LMF) is informed by the TRP_N and forward this information to the serving cell. Alternatively, the network may trigger trigger the TRP-N to transmit the O-PRS, and may accordingly inform the UE about the transmission of the O-PRS.

For examples, a serving cell/gNB/TRP triggers the UE to measure an O-PRS with a DCI signaling. This may be subject to the UE capabilities and O-PRS characteristics (for example O-PRS in/out active BWP) and O-PRS priority. For example, the serving cell can allocate a measurement gap for the UE to perform the O-PRS actions only.

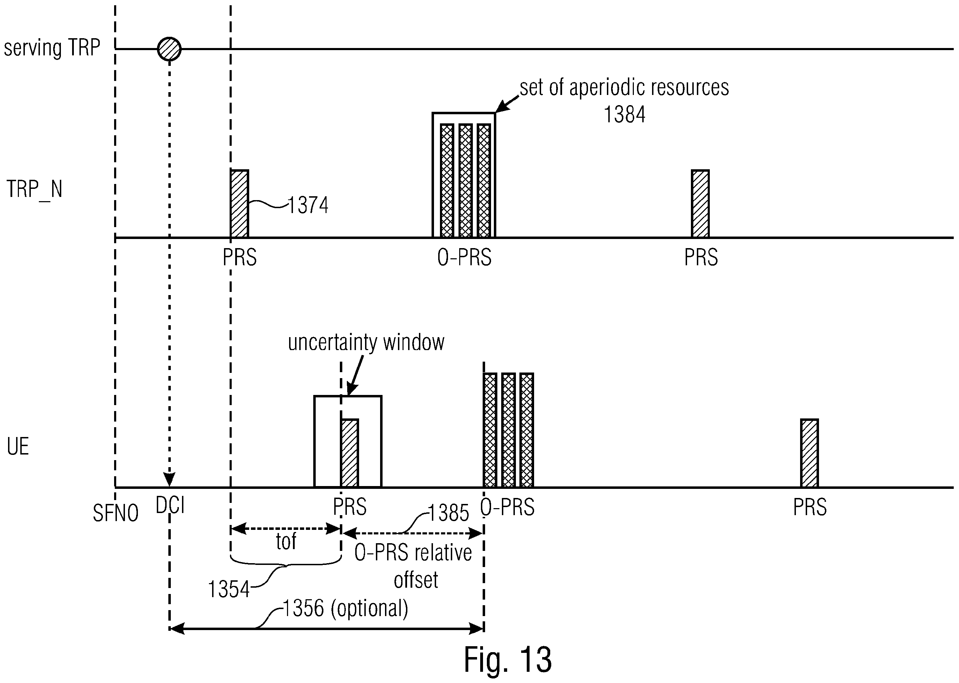

Fig. 13 illustrates a scenario for a transmission of O-PRS from a neighboring TRP (TRP_N) according to an embodiment. The TRP_N transmits a PRS 1374 and a set of aperiodic O-PRS 1384. For the measuring of the O-PRS, the UE may be informed from higher layers (example LPP or RRC or MAC-CE) on the associated PRS 1374 (e.g. an associated first radio resource). An additional O-PRS relative offset 1385 is defined relative to the associated PRS 1374. The UE uses this information to obtain a O-PRS time-information. In other words, the UE may infer from the defined time offset between the PRS and the O-PRS, and from a time of arrival of the PRS, an expected time of arrival of the O-PRS. This approach has the advantage that the uncertainty window can be ignored or kept small. The uncertainty window is needed since the UE-timing and TRP-UE distance are not coordinated in advance for non-serving cells. Thus, a time of flight 1354 between the TRP_N and the UE may be unknown to the UE, giving rise to a uncertainty in the time of arrival of the PRS and the O-PRS. Thus, the UE may use the PRS for synchronization with the TRP_N. Another advantage is that the UE can have a better detectability if the O-PRS window is accurately known. This is relevant in low coverage or high interference scenarios. Indicating the relative offset 1385 provides for a low risk of missing the O-PRS.

In another option, the network can indicate the DCI timing relation to an O-PRS directly, for example by indicating the O-PRS offset 1356. In this case, and uncertainty window may be defined for the O-PRS transmitted from the neighboring TRP. This option may be particularly relevant for the neighboring TRP in the case that O-PRS has better detectability than the PRS. A periodic or semi-persistent transmission may be preferred. In other words, the scenario of Fig. 13 may equivalently be employed for semi-persistent or periodic O-PRS.

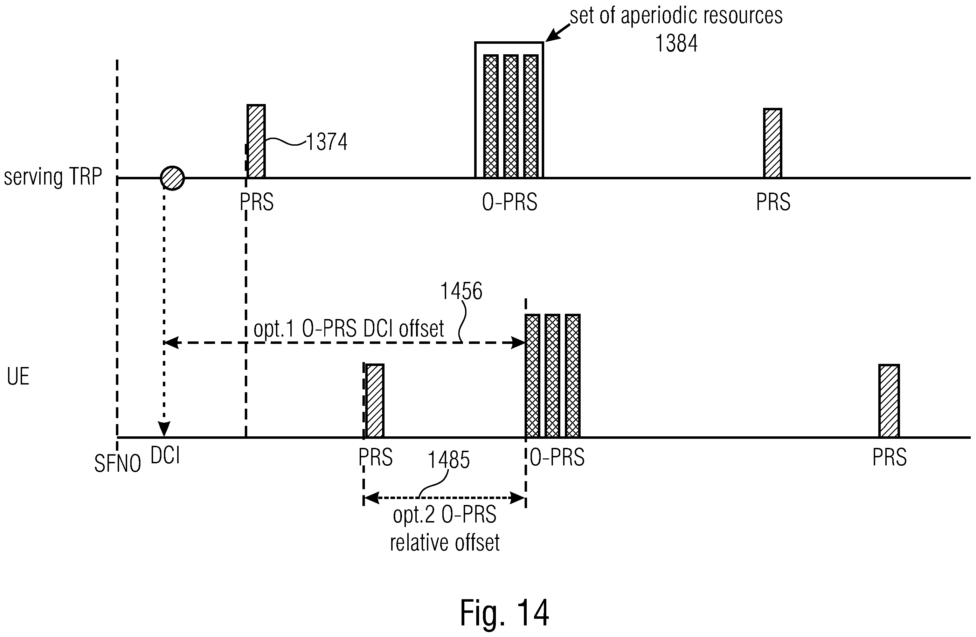

Fig. 14 illustrates another scenario according to an embodiment, in which the PRS 1374 and the set of O-PRS 1384 are transmitted by a serving TRP. In a first option, a timing information 1456 is provided to the UE, that timing information 1456 indicating a time offset between the O-PRS 1384 and a reference time, e.g. indicated by a DCI message. In a second option, a relative time offset 1485, similar to the timing of said 1385 explained with respect to Fig. 13, between the PRS 1374 and the O-PRS 1384 as provided to the UE. For a serving TRP the first option could be a preferred option.

The methods for triggering the O-PRS measurements described with respect to Fig. 13 in Fig. 14 may in a similar manner be employed for SP O-PRS or periodic O-PRS. However, the foreign differences may apply: Periodic or SP O-PRS Resources may be triggered with MAC-CE or RRC or LPP signaling. For example, MAC-CE may trigger an SP measurements instead of DCI, which may in examples be used for triggering of aperiodic O-PRS. In further examples, RRC may trigger a periodic O-PRS measurement.

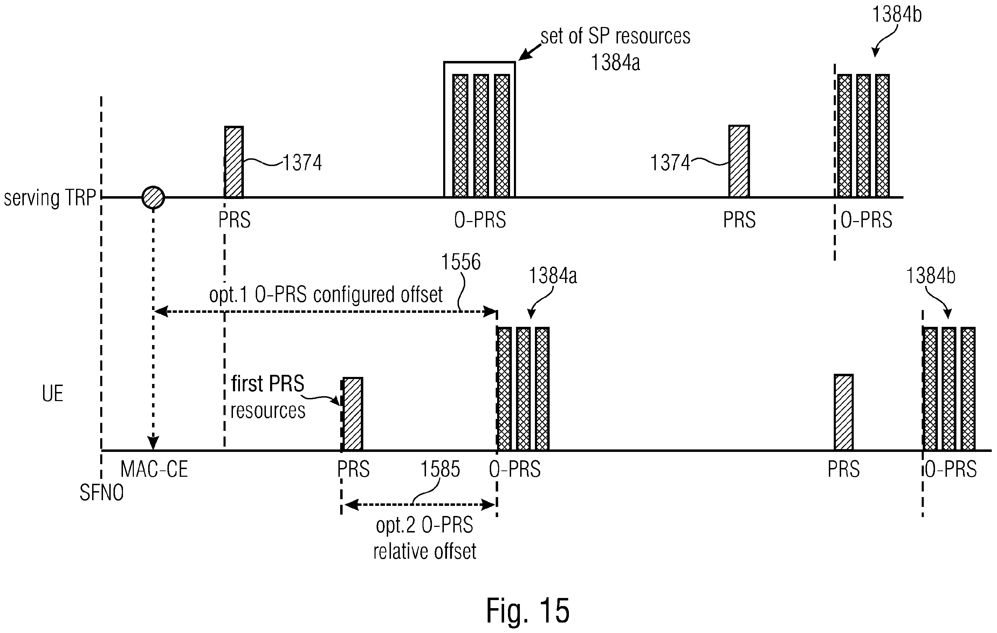

Fig. 15 illustrates a scenario for a transmission of SP O-PRS according to an embodiment. The scenario may equivalently employed to periodic O-PRS. A TRP, for example a serving TRP, transmits periodic PRS 1374 and a set of sets 1384a, 1384b of O-PRS. As illustrated in Fig. 15, for SP O-PRS or P O-PRS, the indication of the relative offset between the PRS and the O-PRS, like the relative offset 1385, 1485, may refer to a first transmission of the O-PRS, like the set 1384a of O-PRS in Fig. 15. For example, the network provides a resource slot offset information 1585 (optionally SFN or frame offset) on the PRS 1374 associated with the first transmission of the O-PRS 1384a. Equivalently as expand with respect to Fig. 13 in Fig. 14, in an alternative option, a timing information 1556 may be provided to the UE, the timing information 1556 indicating and offset between the first set 1384a of O-PRS and a reference time. For example, in case of SP O-PRS, the reference time may be indicated by an MAC-CE message. In case of key O-PRS, the reference 10 may be indicated by a RRC message. It is pointed out, that these options may also be employed for non-serving TRPs, equivalently as expand with respect to Fig. 13.

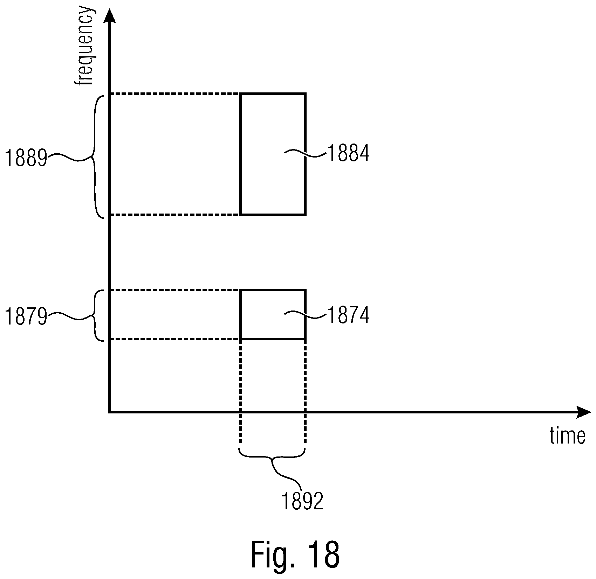

Fig. 18 shows a time-frequency diagram illustrating another example of an arrangement of a first radio resource 1874 and a second radio resource 1884. The first radio resource 1874 and the second radio resource 1884 are located within a common time period 1892. The time period 1892 may correspond to one of a radio frame, a slot, a symbol, e.g. a OFDM symbol, or a number of symbols, as described with respect to Fig. 2. The first radio resource 1874 is in a first frequency range 1879. The second radio resource 1884 is in a second frequency range 1889. The first frequency range 1879 and the second frequency range 1889 may be contiguous or non-contiguous. The first frequency range 1879 may be a first bandwidth part and the second frequency range 1889 may be a second bandwidth part. The apparatus 600 may measure the first radio resource 1874 and the second radio resource 1884 simultaneously.

In examples, the apparatus 600 may determine a first measurement information based on a measurement on the first radio resource 1874, for example by the measuring a first reference signal transmitted on the first radio resource 1874. Further, the apparatus 600 may determine a second measurement information on the basis of a measurement on the second radio resource 1884, for example the measure in a second reference signal transmitted on the second radio resource 1884. The first and/or the second measurement information may each comprise one or more values for one or more measured quantities such as a received power, a time of arrival, an angle of arrival or a phase as described for the measurement information with respect to Fig. 6. The apparatus 600 may determine a combined measurement information on the basis of the first measurement information and the second measurement information. For example, the apparatus 600 may combine the values for a measured quantity from the measurements of the first radio resource 1874 and the second radio resource 1884, so as to obtain a combined value for a measured quantity. In other words, the apparatus 600 may combine the first measurement information and the second measurement information so as to obtain a combined measurement information. The apparatus 600 may obtain the combined value by accumulating the values of the first measurement information the second measurement information, or by determining an average or a weighted sum of the values of the first measurement information and the second measurement information. For example, the apparatus 600 may estimate respective errors of the value of the first measurement information and the value of the second measurement information and the main determine the weights for the weighted sum based on the estimated errors. In examples, a weight may be set to zero. Thus, the apparatus 600 may select one of the first measurement information and the second measurement information as the combined measurement information.

In further examples, the apparatus 600 may perform a measurement, for example an aggregated measurement, on aggregated radio resources comprising the first radio resource 1874 and the second radio resource 1884. In other words, the apparatus 600 may aggregate signals received in the first frequency range 1879 and the second frequency range 1889 within the time period 1892 so as to obtain an aggregated signal, and may obtain a combined measurement information on the basis of the aggregated signal. Thus, the apparatus 600 may obtain one or more of a received power, a time of arrival, an angle of arrival or a phase on the basis of the aggregated signal received in the first frequency range 1879 and the second frequency range 1889. The apparatus 600 may aggregate or accumulate a first reference signal received on the first radio resource 1874 and a second reference signal received from the second radio resource 1884 to obtain the aggregated signal. In examples, the apparatus 600 may weight a first reference signal received on the first radio resource 1874 and a second reference signal received on the second radio resource 1884 so as to obtain the aggregated signal.

The first frequency range 1879 and the second frequency range 1889 may be located within one frequency layer.

In other examples, the first frequency range 1879 and the second frequency range 1889 may be located within different frequency layers. In examples, the apparatus 600 is capable of measuring within different frequency layers. In this case, the apparatus 600 may measure the first radio resource 1879 and the second radio resource 1889 simultaneously. If the apparatus 600 is not capable of measuring within different frequency layers, the apparatus 600 may decide to measure either the first radio resource 1874 or the second radio resource 1884 based on a priority rule for the first and second radio resources 1874, 1884. For example, the priority rule may be provided by a higher layer signaling.

Thus, the apparatus 600 may perform a joint measurement on the first radio resource 1874 and the second radio resource 1884. The combination of the first radio resource 1874 and the second radio resource 1884 may be referred to as aggregated radio resources, on which the apparatus 600 may perform an aggregated measurement. For example, the apparatus 600 may perform the aggregated measurement on a non-overlapping part of the first radio resource 1874 and the second radio resource 1884.

In the following, several aspects are described in more details, which may optionally be employed in the embodiments described with respect to Figs. 8, 9, 10, 13, 14, 15, 18 for example by means of the UE 600 of Fig. 6.

Association Procedure

As described before, the O-PRS may be associated with a DL-RS. For example, an associated DL-RS may be indicated in the second radio resource configuration 680. In alternative examples, the O-PRS can be configured without an DL-RS association.

In examples, the event 664, in response to which the measurement of the O-PRS is activated or deactivated, may be a measurement of a DL-RS. In other words, the O-PRS configuration may be activated or de-activated in association with a measurement from an DL-RS such as PRS, SSB or CSI-RS measurement.

In examples, the UE can be configured with one or more O-PRS resource set configuration(s), like the configuration 680, for periodic, aperiodic and semi-persistent time-domain behaviors.

In examples, the O-PRS can be provided as a mode with the PRS resource or resource set configuration. The PRS modes "always-on" and "Occasional" may be defined with the higher layer signaling defining a DL-PRS-ResourceSet or a DL-PRS-Resource. That is, the configuration 680 may be similar to a configuration of PRS resources, but that may be associated with a dedicated PRS mode for occasional PRS.

In examples, the O-PRS can be derived from resource set configuration if the periodicity type is defined as periodic, aperiodic or semi-persistent or if an information element such as associated DL-RS is indicated.

In examples, the O-PRS PRS resources can have a periodic, aperiodic or semi-persistent configuration. The TRP time and frequency allocation in addition to the additional resource configuration (like start/stop, periodicity, slot offset) are provided to UE over higher layer signaling from the LMF or the TRP.

Time related aspects:

In one option, the network provides the UE over higher layer configuration including a time information on the O-PRS to be measured relative to the associated DL-RS. That is, the scenario as explained with respect to Fig. 13, Fig. 14 and Fig. 15 may also be employed to reference signals different from PRS.

For example, the configured relative time is provided as a *relative Slot Offset* associated (for a resource or a resource set) with at least one DL-RS resource ID, e.g. the time 1385, 1485, 1585. In examples, if a relative time relation with the DL-RS is configured, the UE is expected to measure the O-PRS only during the indicated time and O-PRS periodicity and slot resource configurations. One example is show in Fig. 10, where the *O-PRS start or O-PRS relative Slot Offset* indicates the O-PRS resource (or resource set) start or offset in relation DL-RS (resource 1).

In examples, the O-PRS time relation configuration (example O-PRS *relative Slot Offset*) depends on at least one of the following: DL-RS Resource Set Slot Offset, DL-RS Periodicity, DL-RS Resource Slot Offset, O-PRS Periodicity.

For example, the UE may use timing information defining the System Frame Number 0 offset defining the time offset of the SFN#0 slot#0 for the given TRP with respect to SFN#0 slot#0 of the assistance data reference TRP from an associated TRP to derive a timing information.

Measurement related aspects:

In one option, the UE can be indicated by the network to perfrorm measurements for O-PRS resources according to a critertria indicated by the network.

In one example, the UE is expected to measure RSRP of the O-PRS resources associated with at least one DL-RS within a PRS resource set. This can be related to the AoD procedure where the UE should not measure the resources of an O-PRS in the NLOS or weak direction for DL-RS. The criteria to choose the O-PRS resource can be left to the UE or indicated the UE by higher layers.

In one example, the UE is expected to measure the RSTDs,TX-RX, RSRPs for the O-PRS resources associated with at least one DL-RS within a PRS resources according to QCL-type indication provided by the O-PRS configuration.

In one option, the UE can be configured with a TRS, CSI-RS (RRM: Radio resource management), CSI-RS (RLM: Radio link monitoring) or CSI-RS for Beam Management as the DL-RS for an O-PRS resource. That is the UE applies the O-PRS procedure on available or network configured RSs to perform the DL positioning measurements.

If not otherwise indicated by the higher (QCL-type) the UE may assume that the O-PRS resources are quasi-co-located with the associated DL-RS resources.

Time Behavior

In examples, a O-PRS resource can be configured to have one of semi-persistent, aperiodic and periodic configuration. For periodic and semi-persistent configuration, a periodicity may be configured, for example like the O-PRS. 1086 to Fig. 10. The periodicity may be configured based on a number of slots, such that the resource is transmitted once every N slots. As an example, for a subcarrier spacing configuration $\mu$, the periodicity $T_{\text{per}}^{\text{PRS}} \in$ $2^{\mu}\{4, 5, 8, 10, 16, 20, 32, 40, 64, 80, 160, 320, 640, 1280, 2560, 5120, 10240\}$ slots.

Also, time offsets, for example time offsets 1354, 1356, 1456, 1554, 1556 may be configured by means of a number of slots. In other words, an offset measured in number of slots can be configured. In examples, the reference point for the slot offset may be with respect to the first slot (slot 0) of radio frame 0.

Aperiodic O-PRS may optionally be defined by means of a slot offset relative to the slot where the DCI which triggered it was received, for example the timing information 1456 of Fig. 14. For example, the slot offset is defined on a CSI-RS resource set level.

In one option, if the network did not configure the Aperiodic O-PRS with a slot offset, the UE assumes that the O-PRS and the associated RS is present in the same slot.

O-PRS Sequence generation

For example, a reference signal sequence generation for the O-PRS, or the second reference signals 782, maybe performed according to TS38.211 sec 7.4.1.7:

In one option, the UE shall assume the reference-signal sequence $r(m)$ is defined by

$$r(m) = \frac{1}{\sqrt{2}}\left(1 - 2c(2m)\right) + j\frac{1}{\sqrt{2}}\left(1 - 2c(2m + 1)\right)$$

where the pseudo-random sequence c(i) is defined in clause 5.2.1. The pseudo-random sequence generator shall be initialised with

$$c_{\text{init}} = \left(2^{22}\left\lfloor\frac{n_{\text{ID,seq}}^{\text{PRS}}}{1024}\right\rfloor + 2^{10}\left(N_{\text{symb}}^{\text{slot}}n_{\text{s,f}}^{\mu} + l + 1\right)\left(2\left(n_{\text{ID,seq}}^{\text{PRS}} \bmod 1024\right) + 1\right) + \left(n_{\text{ID,seq}}^{\text{PRS}} \bmod 1024\right)\right) \bmod 2^{31}$$

where $n_{\text{s,f}}^{\mu}$ is the slot number, the downlink PRS sequence ID $n_{\text{ID,seq}}^{\text{PRS}} \in \{0,1,\ldots,4095\}$ is given by a higher-layer parameter and $l$ is the OFDM symbol within the slot to which the sequence is mapped.

UE Procedure related to priority

In examples, the UE shall not expect to be configured with O-PRS over the symbols during which the UE is also configured with a PRS resources. If the UE is configured O-PRS resources having overlapping OFDM symbols with another PRS resource, the UE can assume that both resources are quasi co-located with QCL-typeD.

In examples, the if AP O-PRS resources is configured with a periodic PRS or a periodic O-PRS, then the time and frequency domain configurations must match those of the periodic PRS.

In examples, the if configured in the same slot, or the UE is not capable of processing multiple O-PRS resources in configured time; the aperiodic O-PRS has the highest priority according to the following priority rule:

- AP-O-PRS > SP-O-PRS > P-O-PRS

In examples, the if configured in the same slot or the UE is not capable of processing an O-PRS together with (always -on) PRS resources; the aperiodic or SP-O-PRS has the higher priority over PRS according to the following priority rule:

- AP-O-PRS > SP-O-PRS > PRS
- PRS>P-PRS unless otherwise indicated.

In examples, the if the network configures the UE with O-PRS beyond the UE capability: if not otherwise indicated the UE will assume the following priority:

1st X1 frequency layers
2nd X2 TRPs per frequency layer

3rd X3 sets per TRP of the frequency layer
4th X4 resources of the set per TRP per frequency layer

X1, X2,X3 and X4 are defined UE capabilities .

In examples, the an O-PRS resource or resource-set can include a mode. This mode can provide UE procedures to be used by the UE related to O-PRS resources to be processed. For each mode the UE expects to be configured with a set of resources configured in a specific way.

Frequency Behavior

In examples, the UE expects that the O-PRS and DL-RS associated with the O-PRS are configured in the same BWP.

In examples, the UE can be configured to perform an O-PRS measurement outside the active BWP (bandwidth part) conditioned that the DL-RS is in the same inactive BWP and a measurement gap is configured for the measurement.

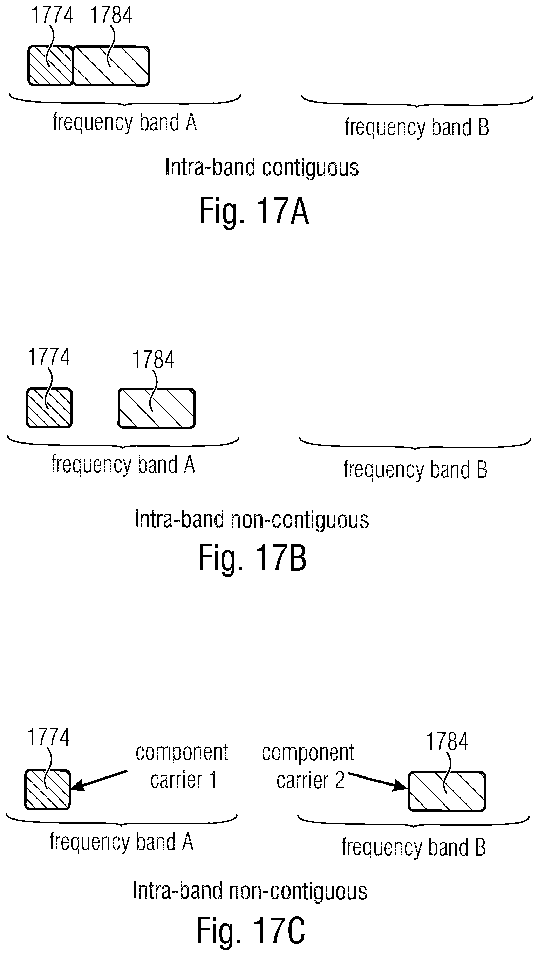

Fig. 17 illustrates examples of radio resource configurations for PRS and O-PRS resources. In panel (a), and intra-band contiguous scenario is shown, in which a first bandwidth part 1774, in which PRS resources are located, and a second bandwidth part 1784, in which O-PRS resource are located, are arranged contiguously within one frequency band. Panel (b) illustrates an intra-band non-continuous scenario, in which the bandwidth part 1774 and bandwidth part 1784 are arranged non-contiguously within one frequency band. Panel (c) illustrates an inter-band non-contiguous scenario, in which the bandwidth part 1774 and the bandwidth part 1784 are arranged non-contiguously in different frequency bands. For example, a bandwidth part refers to a frequency range, for example to one or more subcarriers as explained with respect to Fig. 3.

In examples, if UE does not report a capability to measure without measurement gap, UE does not support O-PRS processing without measurement gap. For example, if the UE does not support a measuring without measurement gap, the UE may be measuring only contiguous bandwidth parts.

For example, the current DL PRS RE pattern may be employed, which supports comb size N equal to number of symbols M as for example

- Comb-2: Symbols {0, 1} have relative RE offsets {0, 1}
- Comb-4: Symbols {0, 1, 2, 3} have relative RE offsets {0, 2, 1, 3}
- Comb-6: Symbols {0, 1, 2, 3, 4, 5} have relative RE offsets {0, 3, 1, 4, 2, 5}

The comb size N is restricted to the of number of symbols M to achieve full staggering (achieve an equivalent comb1) and hence remove the ambiguity resulting from the additional correlation peaks. In examples, the O-PRS can have a relaxed RE pattern i.e. supporting partial staggering or a comb size N less than the number of symbols M. This can be achieved since the ambiguity can be resolved from the reference (associated) DL-RS.

In examples, the comb size $K_{\text{comb}}^{\text{oPRS}} \in \{2, 4, 6, 12\}$ is indicated by the higher-layer parameter o-*PRS-CombSizeN* such that the combination $\{L_{\text{PRS}}, K_{\text{comb}}^{\text{PRS}}\}$ of PRS release16 of {2, 2},{4, 2}, {6, 2}, {12, 2}, {4, 4}, {12, 4}, {6, 6}, {12, 6} and {12, 12} are supported. In addition, O-PRS supports new combinations which includes one or more of the following: {1, 1},{1, 2}, {1, 6}, {12, 1}, {12, 4}, where $L_{\text{PRS}}$ is the size of the downlink PRS resource in the time domain and $K_{\text{comb}}^{\text{oPRS}}$ is theO-PRS transimission comb factor. For example, the O-PRS $\{L_{\text{PRS}}, K_{\text{comb}}^{\text{PRS}}\}$ combination is configured according to the usage.

Configuration and Activation/Deactivation Procedure

In the following, a configuration and activation or deactivation procedure between a UE and one or more TRPs in a wireless communication network is described. For example, the wireless completion network may correspond to the one described in Fig. 5, comprising a UE 500, which may correspond to the UE 600, and further comprising at least one TRP, for example a serving TRP 502 and optionally a non-serving TRP 504. For example, the apparatus 700 may correspond to the serving TRP 502 or the non-serving TRP 504.

For example, a network entity (e.g. of the LMF 550 or serving TRP 502) provides the UE 500 with the DL-RS resource configuration, for example the first radio resource configuration 670 and one or more O-PRS configuration(s) 680. For example, the resource configuration is provided over a higher layer interface like LPP if the LMF is the configuring entity. In a different option, the resource configuration can be provided over RRC if the s-TRP is the configuring entity.

In one option, the network can enable the serving TRP to activate, deactivate or update an O-PRS configured form an LMF. The O-PRS can correspond to a neighboring or serving TRP. That is the UE may receive an O-PRS configuration from one entity (e.g. the LMF) and is controlled by another entity (e.g. the serving TRP). In this case, the LMF and the TRP can exchange configuration over an NRPPa interface or the similar.

In one option, the TRPs can configure the UE directly with an O-PRS resource configuration. The serving TRP can be provided with O-PRS information from the n-TRPs which it provides to the UEs in its serving cell. The configuration is performed over higher layer interface (RRC).

For periodic and semi-persistent O-PRS configurations, the LMF may provide the UE with the measurement occasions for O-PRS (i.e. without involvement of the s-TRP).

According to the options above, the O-PRS resources, for example the O-PRS resource configuration 680, are provided to the UE in the assistance data for an LPP message from an LMF. Alternatively, the O-PRS Resources are provided to UE in the RRC message from a serving TRP.

In examples, the interface for activation/deactivation, resource update is subject to O-PRS periodicity configuration (aperiodic, semi-persistent and periodic) which can be DCI, MAC CE or RRC. For example, the O-PRS resources and resource set are mapped to the TRPs and Frequency layers, similar to PRS, to include at least one of the following information:

- frequency layers

  ○ TRPs per frequency layer

    ▪ O-PRS resource sets per TRP of the frequency layer

      • O-PRS resources of the set per TRP per frequency layer

In one option, the LMF can provide the TRPs with a configuration for the O-PRS for AoD measurements. The TRPs can confirm the O-PRS signaling to the LMF and provides the LMF with additional information on the detailed PRS configuration and the angle-information related to the signaled PRS resources. A TRP can also inform the LMF that desired PRS configuration is not possible. The UE is then configured by the LMF with the O-PRS resources. The network may also configure the UE with a measurement gap to perform the PRS measurements on the indicated resources.

In the following, example procedures for the three different O-PRS time behaviors are provided:

**Semi- Persistent SP O-PRS:**

This procedure may enable the LMF or a coordinating/scheduling entity to request activation and deactivation of O-PRS measurement from the gNBs. The procedure may further enable the LMF or a gNB to request activation and deactivation of O-PRS measurement at of the target UE.

In one option, the O-PRS activation/deactivation request information is signaled from the LMF to the gNBs or TRPs. For the activation/deactivation and possibly resource configuration, the LMF can gNB or TRPs can be a serving or a neighboring gNB/TRP.

In one option, the LMF sends a NRPPa message to the serving gNB to request O-PRS activation for the target UE. For a semi-persistent O-PRS, the message includes an indication of an O-PRS resource set to be activated and may include information that indicates resources configuration of the semi-persistent O-PRS resource to be activated.

An example procedure for configuring and activating an SP O-PRS procedure is provided in the following steps:

(0) The gNB sends a NRPPa message to the LMF providing information on one more SP O-PRS resource sets.

(1) The SP O-PRS information are provided to a UE in either one of the following options:

(a) the serving gNB can provide a target UE by a higher transmission (example RRC) an O-PRS resource-set configuration including at least one resource, or
(b) the LMF can provide a target UE by a higher transmission (example LPP) an O-PRS resource-set configuration including at least one resource.

(2) Optionally, the LMF sends a NRPPa message to a gNB in the network to request an SP O-PRS activation. For a SP O-PRS, the message includes an indication of an SP O-PRS resource set ID to be activated.

(3) The serving gNB may then activate the configured semi-persistent O-PRS resource sets by sending a higher layer signaling (MAC CE command) by a new parameter such as *SP-PRS-Positioning Activation/Deactivation.*

(4) If the O-PRS has been successfully activated, the gNB can send a NRPPa response message to the LMF. If the serving gNB is not able to fulfil the request, it returns a failure message indicating the cause of the failure.

(5) Optionally, if a previously activated O-PRS should be deactivated, the LMF sends a NRPPa message to the serving gNB of the target device to request deactivation. This message includes an indication of the O-PRS resource set to be deactivated.

(6) The UE may assume that the SP O-PRS is present in the configured slots up until the UE receives an explicit deactivation. The activation can be MAC-CE deactivation message from the gNB.

It is noted, that the numbers are to be understood as a references and do not indicate a mandatory sequence of the steps. Thus, in examples, the method may be performed in the indicated order, while number examples, the order of the steps may be different.

**Aperiodic O-PRS**

The configuration for an AP O-PRS may be similar to that of an SP, expect for the steps (3) and (6). In step (3), for AP O-PRS activation, the higher layer signaling may be achieved by the PDCCH with DCI and not MAC-CE. In this case the UE may identify the slot in which the resource is present depending on a configured slot offset in the PDCCH. Further, in step (6) for UE procedure, for an aperiodic O-PRS resource, the UE may only assume the presence of a configured resource once it receives a higher layer signaling that explicitly triggers the O-PRS aperiodic resource.

In one option, the Aperiodic O-PRS is conditioned on N-TRP and S-TRP time-uncertainty behavior. For example, if the timing between the activated O-PRS over DCI from the s-TRP and the O-PRS corresponding to a neighboring TRP cannot be aligned, then A-O-PRS is activated for the s-TRP only.

For example, the O-PRS is conditioned, i.e. activated or deactivated, in dependence on a time-uncertainty or a timing difference between PRS transmitted by a s-TRP and O-PRS transmitted by a n-TRP.

Alternatively, the activation of aperiodic O-PRS can be performed as follows:

(1) Resources are configured in all TRPs the UE is expected to receive, but not activated yet.

(2) The LMF and/or other another network entity send simultaneous request sent to TRPs for activation. For example, the LMF may send O-PRS_ACTIVATION_REQUEST to the gNB hosting the TRP.

(3) TRPs via gNB report back to LMF whether the activation is successful or not. LMF sends signaling back to the gNB hosting the TRP belonging to the serving cell (e.g. primary cell) indicating which of the configured TRPs have acknowledged activation of the LMF and which of them sent error message. This could for example be sent as a bitmap signal.

(4) The UE is sent this information via DCI.

In case of semi-persistent O-PRS, the signaling about which of the TRPs activated the O-PRS may be signaled as a MAC-CE.

**Periodic O-PRS**

In examples, for the case of periodic O-PRS, the activation and deactivation in steps (2) and (4) of the method described with respect to SP O-PRS do not apply necessarily. Once the resource is configured to the UE, the UE may assume that it is present within the configured periodicity and offset values in the defined Slots. For example, the LMF can configure and activate the UE P-O-PRS resources over LPP.

The s-TRP may activate the UE O-PRS resources over RRC, for example for reduced latency applications.

For example, a procedure for configuring and activating periodic O-PRS may be similar to the above-described procedure:

(0) The gNB sends a NRPPa message to the LMF providing information on one more O-PRS resources or recource sets.

(1) The O-PRS information are provided to a UE in either one of the following options:

(a) the serving gNB can provide a target UE by a higher transmission (example RRC or posSIBs) an O-PRS resource-set configuration including at least one resource, or
(b) the LMF can provide a target UE by a higher transmission (example LPP) an O-PRS resource-set configuration including at least one resource.

(2) the LMF sends a NRPPa message to a gNB in the network to request an O-PRS activation. For a O-PRS, the message includes an indication of an O-PRS resource or resource set ID to be activated.

(3) The serving gNB may then activate the configured O-PRS resource sets by sending a higher layer signaling

(4) If the O-PRS has been successfully activated, the gNB can send a NRPPa response message to the LMF. If the serving gNB is not able to fulfil the request, it returns a failure message indicating the cause of the failure.

(5) Optionally, if a previously activated O-PRS should be deactivated, the LMF sends a NRPPa message to the serving gNB of the target device to request deactivation. This message includes an indication of the O-PRS resource set to be deactivated.

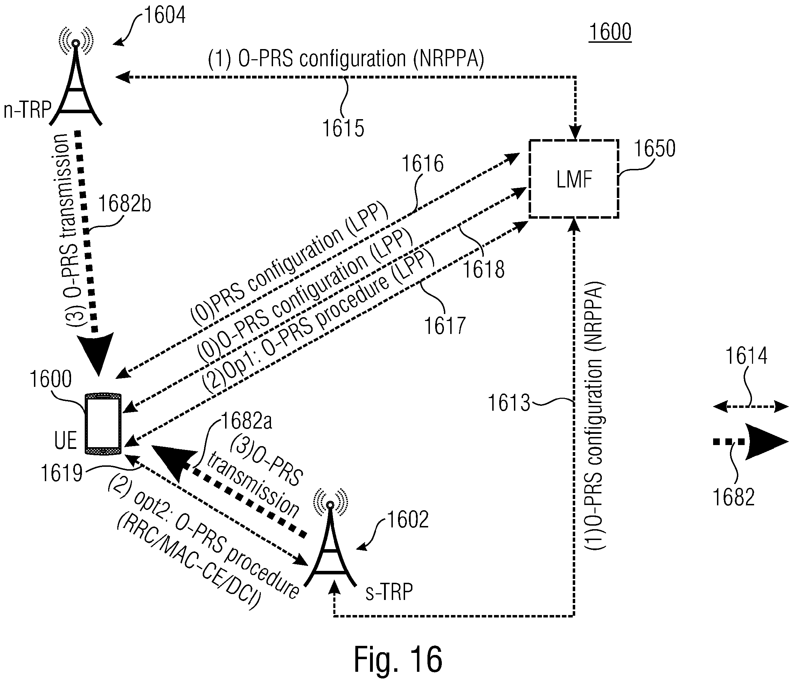

Fig. 16 illustrates examples of LMF based O-PRS configuration procedures according to embodiments. Fig. 16 may provide a framework, in which examples of the above described methods for semi-persistent O-PRS, aperiodic O-PRS and periodic O-PRS may be implemented. A wireless communication network 1600, for example like the wireless communication network 500 of Fig. 5, comprises a user device 1600, for example the user device 500 or the apparatus 600, a serving TRP 1602, for example the TRP 502, which may be embodied by the apparatus 700, and a LMF 1650, for example the LMF 550. Optionally, the net wireless communication network 1600 further comprises a non-serving TRP 1604, for example the TRP 504, which may correspond to embodiments of the apparatus 700. The LMF 1650 communicates with the UE 1600, the TRP 1602, and optionally with the TRP 1604 by a higher layer signaling 1614. The LMF 1650 may provide a signaling 1660 of a PRS configuration, for example the first radio resource configuration 670, to the UE 1600. Further, the LMF 1650 may provide a signaling 1618 of a O-PRS configuration, for example the second radio resource configuration 680, to the UE 1600. For example, the signaling 1616 and 1618 may be performed via LPP. Further, the LMF 1650 exchanges information 1613 about a O-PRS configuration with the TRP 1602. Additionally or alternatively, the LMF 1650 exchanges information 1615 about an O-PRS configuration with the non-serving TRP 1604. For example, the LMF 1650 provides the O-PRS configuration to the serving TRP 1602 and/or the non-serving TRP 1604. For example, the signaling 1613 and 1615 may be performed via NRPPA.

In examples, the LMF 1650 provides a signaling 1617 to the UE 1600 for activating or deactivating the measuring of the O-PRS resources. That is, the UE 1600 may activate or deactivate the measuring the O-PRS resources of in response to a receipt of the signaling 1617. In other examples, the serving TRP 1602 provides a signaling 1619 to the UE 1600 for activating or deactivating the measuring of the O-PRS resources.

For example, O-PRS 1682a may be transmitted by the serving TRP 1602. Additionally or alternatively, O-PRS 1682b may be transmitted by the non-serving TRP 1604. In examples, the serving TRP 1602 may provide the signaling 1619 for activating the measurement of the O-PRS resources on which the O-PRS 1682a are transmitted. In case of an O-PRS transmission by the TRP 1604, the LMF 1615 may provide the signaling 1617 for activating the measurement of the O-PRS resources from which the O-PRS 1682b is transmitted.

Association to uplink reference signals

The occasional positioning reference signal in the downlink could be used, for example, to set parameters such as spatial relation. For a UE that has just transitioned into an RRC-connected state, the network may not have enough measurement already available to set the spatial relation so as to maximize the coverage to the required number of TRPs. Therefore, the occasional PRS could be configured to determine a suitable spatial relation of the UE for SRS transmission or for receiving wideband downlink positioning reference signals.

In examples, if a UE is configured with occasional PRS, then the UE could be configured with SRS without specifying a spatial relation or the UE could be configured with a spatial relation, which could be selected from a set of downlink reference signals. Instead of specifying a spatial relation, the UE may be given a sub-set of spatial relations to choose from. For example,

(1) the UE is either configured with a resource set (as defined in Rel. 16) or it may be configured with an ID which associates resources from different resource sets with an ID. In the second case, the UE is sent a configuration by the NW where the configuration contains one or more or all of: Group ID of the DL RS set, TRP-ID, Resource-set ID, Resource-ID.

(2) the UE may be configured with the configuration which tells the UE whether to select one or other downlink reference signal based on the measurement of one or more downlink signals it has already measured.

(3) either, the UE may determine the best suitable spatial relation and use this spatial relation for transmitting the SRS, or the UE may report the best suitable spatial relation and the NW provides RRC reconfiguration message updating the spatial relation.

Features which are described with respect to a user device correspondingly be embodied in a network entity, for example the LMF or the TRP according to the interplay between the UE and the network entity within the wireless communication network as described herein. Accordingly, features which are described with respect to a network entity, such as the LMF or a TRP, may correspondingly be embodied in a user device according to the interplay between the UE and the network entity within the wireless communication network as described herein.

Although some aspects have been described as features in the context of an apparatus it is clear that such a description may also be regarded as a description of corresponding features of a method. Although some aspects have been described as features in the context of a method, it is clear that such a description may also be regarded as a description of corresponding features concerning the functionality of an apparatus.

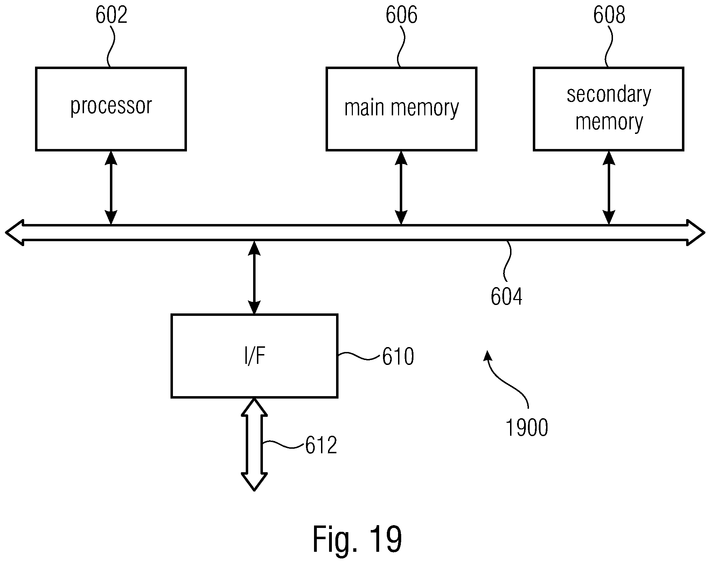

Various elements and features of the present invention may be implemented in hardware using analog and/or digital circuits, in software, through the execution of instructions by one or more general purpose or special-purpose processors, or as a combination of hardware and software. For example, embodiments of the present invention may be implemented in the environment of a computer system or another processing system. Fig. 19 illustrates an example of a computer system 1900. The units or modules as well as the steps of the methods performed by these units may execute on one or more computer systems 1900. The computer system 1900 includes one or more processors 602, like a special purpose or a general-purpose digital signal processor. The processor 602 is connected to a communication infrastructure 604, like a bus or a network. The computer system 1900 includes a main memory 606, e.g., a random-access memory, RAM, and a secondary memory 608, e.g., a hard disk drive and/or a removable storage drive. The secondary memory 608 may allow computer programs or other instructions to be loaded into the computer system 1900. The computer system 1900 may further include a communications interface 610 to allow software and data to be transferred between computer system 1900 and external devices. The communication may be in the from electronic, electromagnetic, optical, or other signals capable of being handled by a communications interface. The communication may use a wire or a cable, fiber optics, a phone line, a cellular phone link, an RF link and other communications channels 612.

The terms "computer program medium" and "computer readable medium" are used to generally refer to tangible storage media such as removable storage units or a hard disk installed in a hard disk drive. These computer program products are means for providing software to the computer system 1900. The computer programs, also referred to as computer control logic, are stored in main memory 606 and/or secondary memory 608. Computer programs may also be received via the communications interface 610. The computer program, when executed, enables the computer system 1900 to implement the present invention. In particular, the computer program, when executed, enables processor 602 to implement the processes of the present invention, such as any of the methods described herein. Accordingly, such a computer program may represent a controller of the computer system 1900. Where the disclosure is implemented using software, the software may be stored in a computer program product and loaded into computer system 1900 using a removable storage drive, an interface, like communications interface 610.

The implementation in hardware or in software may be performed using a digital storage medium, for example cloud storage, a floppy disk, a DVD, a Blue-Ray, a CD, a ROM, a PROM, an EPROM, an EEPROM or a FLASH memory, having electronically readable control signals stored thereon, which cooperate or are capable of cooperating with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. The data carrier, the digital storage medium or the recorded medium are typically tangible and/or non-transitory.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The apparatus described herein may be implemented using a hardware apparatus, or using a computer, or using a combination of a hardware apparatus and a computer.

The methods described herein may be performed using a hardware apparatus, or using a computer, or using a combination of a hardware apparatus and a computer.

In the foregoing Detailed Description, it can be seen that various features are grouped together in examples for the purpose of streamlining the disclosure. This method of disclosure is not to be interpreted as reflecting an intention that the claimed examples require more features than are expressly recited in each claim. Rather, as the following claims reflect, subject matter may lie in less than all features of a single disclosed example. Thus the following claims are hereby incorporated into the Detailed Description, where each claim may stand on its own as a separate example. While each claim may stand on its own as a separate example, it is to be noted that, although a dependent claim may refer in the claims to a specific combination with one or more other claims, other examples may also include a combination of the dependent claim with the subject matter of each other dependent claim or a combination of each feature with other dependent or independent claims. Such combinations are proposed herein unless it is stated that a specific combination is not intended. Furthermore, it is intended to include also features of a claim to any other independent claim even if this claim is not directly made dependent to the independent claim.

The above described embodiments are merely illustrative for the principles of the present disclosure. It is understood that modifications and variations of the arrangements and the details described herein will be apparent to others skilled in the art. It is the intent, therefore, to be limited only by the scope of the pending patent claims and not by the specific details presented by way of description and explanation of the embodiments herein.

Abbreviations

| Abbreviation | Meaning |
| --- | --- |
| DCI | Downlink Control Information |
| DL | Downlink |
| FAP | First Arriving Path |
| gNB | Next Generation Node-B |
| IMU | Inertial measurement unit |
| LMF | Location Management Function |
| LOS | Line Of Sight |
| LPP | LTE Positioning Protocol |
| LTE | Long Term Evolution |
| NLOS | Non Line Of Sight |
| NW | Network |
| OTDoA | Observe Time Difference of Arrival |
| PRS | Positioning Reference Signal |
| RRC | Radio Resource Control |
| RSTD | Reference Signal Time Difference |
| RTOA | Relative Time of Arrival |
| SRS | Sounding reference signal |
| TOA | Time of Arrival |
| TRP | Transmission Reception Point |
| UE | User Equipment |
| O-PRS | Occasional PRS |
| P- O-PRS | Periodic Occasional PRS |
| A- O-PRS | Aperiodic Occasional PRS |
| SP-O-PRS | Semi-persistent Occasional PRS |
| RS | Reference Signal |
| CSI | Channel State Information |

**Claims**

1. An apparatus (600), e.g. a user device, UE, for a wireless communication network, comprising one or more antennas for receiving a radio signal,

   wherein the apparatus is configured or preconfigured to measure, for a position measurement, one or more first radio resources and one or more second radio resources, wherein the one or more first radio resources and the one or more second radio resources are for transmitting positioning reference signals,
   **characterized in that**
   the apparatus is configured to activate or deactivate, in response to a certain event, a measuring of the one or more second radio resources in addition to, or instead of, the one or more first radio resources for the position measurement,
   wherein the certain event is a measurement of a predetermined positioning reference signal.

2. Apparatus (600) according to claim 1, wherein the apparatus is configured to derive respective time frames for the one or more second radio resources from a timing information which is indicative of a time offset between the one or more second radio resources and one or more of the one or more first radio resources.

3. Apparatus (600) according to claim 1 or 2, wherein the apparatus is configured to derive the time frames for the one or more second radio resources and/or time frames for the one or more first radio resources independent from an information about a timing of a transmission point which is expected to transmit a reference signal using the one or more second radio resources.

4. Apparatus (600) according to any of the claims 1 to 3, wherein the apparatus is configured to measure radio resources within a sensing window so as to detect a first reference signal which is signaled in one or more of the first radio resources, and
derive respective time frames for one or more of the second radio resources from a timing information which is indicative of a time offset between the one or more second radio resources and the first reference signal detected in the one or more first radio resources.

5. Apparatus (600) according to any of claims 3 or 4, wherein the apparatus is configured to activate or deactivate the measuring of the one or more second radio resources in addition to the one or more first radio resources in dependence on the timing information about the one or more first radio resources and the one or more second radio resources.

6. Apparatus (600) according to any of claims 1 to 5, wherein a set of one or more of the second radio resources is associated with one of the first radio resources, and wherein the set of second radio resources has a preconfigured temporal offset to the associated first radio resource.

7. Apparatus (600) according to any of claims 1 to 6, wherein the apparatus is configured to measure two or more of the second radio resources simultaneously.

8. Apparatus (600) according to claim 7, wherein each of the first and second radio resources is associated with a carrier frequency and/or a frequency band and/or a frequency layer.

9. Apparatus (600) according to any of the claims 1 to 8, wherein one of the first radio resources is in a first frequency range, wherein one of the second radio resources is in a second frequency range within a common time period, and wherein the apparatus is configured to measure aggregated radio resources so as to obtain a combined measurement information, the aggregated radio resources comprising the first radio resource and the second radio resource.

10. An apparatus (700) for a wireless communication network, comprising one or more antennas for transmitting a radio signal,

wherein the apparatus is configured or preconfigured to transmit, for a position measurement, one or more first reference signals using one or more first radio resources and one or more second reference signals using one or more second radio resources,
**characterized in that**
the apparatus is configured to activate or deactivate, in response to a reception of an activatior information requesting an activation or a deactivation of a transmission of the one or more second reference signals, a transmission of the one or more second reference signals ir addition to, or instead of, the one or more first reference signals for the position measurement.

11. Location Management Function, LMF,-apparatus (550), for a wireless communication network, **characterized in that** the apparatus is to provide, to a transmission point, an activation information requesting an activation or a deactivation of a transmission of one or more second reference signals in addition to, or instead of, one or more first reference signals for a position measurement between the transmission point and a user device, UE, wherein the apparatus is to provide the activation information in response to a reception of an activation request from the UE.

12. Method for operating an apparatus, e.g. a user device, UE, for a wireless communication network, comprising:

measure, for a position measurement, one or more first radio resources and
one or more second radio resources, wherein the one or more first radio resources and
the one or more second radio resources are for transmitting a positioning reference signals,
**characterized in that** the method comprises:

activate or deactivate, in response to a certain event, a measuring of the one or more second radio resources in addition to, or instead of, the or more first radio resources for the position measurement,
wherein the certain event is a measurement of a predetermined positioning reference signal.

13. Method for operating an apparatus, e.g. a network entity, e.g. a transmission reception point, for a wireless communication network, comprising:
transmit, for a position measurement, one or more first reference signals using one or more first radio resources and one or more second reference signals using one or more second radio resources,
**characterized in that** the method comprises:
activate or deactivate, in response to a reception of an activation information requesting an activation or a deactivation of a transmission of the one or more second reference signals, a transmission of the one or more second reference signals in addition to, or instead of, the one or more first reference signals for the position measurement.

14. Method for operating a Location Management Function, LMF, -apparatus for a wireless communication system, **characterized in that**
the method comprises providing, in response to a reception of an activation request from a user device, UE, to a transmission point, an activation information requesting an activation or a deactivation of a transmission of one or more second reference signals in addition to, or instead of, one or more first reference signals for a position measurement between the transmission point and the UE.

15. Method for operating a wireless communication system (510), comprising

performing a position measurement of a user device (500) being in a serving connection with a first transmission point of the wireless communication system, the position measurement being for determining the position of the user device,
transmitting, for the position measurement, by means of a first transmission point, one or more first reference signals on one or more first radio resources,
transmitting, for the position measurement, by means of a second transmission point, one or more second reference signals on one or more second radio resources,
wherein the one or more first radio resources and the one or more second radio resources are for transmitting positioning reference signals,
**characterized in that** the method comprises:
activating or deactivating, in response to a measurement of a predetermined positioning reference signal by the user device, a measuring of the one or more second radio resources by the user device in addition to, or instead of, the one or more first radio resources for the position measurement.

**Patentansprüche**

1. Vorrichtung (600), z. B. ein Nutzergerät, UE, für ein Drahtloskommunikationsnetz mit einer oder mehr Antennen zum Empfangen eines Funksignals,

wobei die Vorrichtung dazu konfiguriert oder vorkonfiguriert ist, für eine Positionsmessung eine oder mehr erste Funkressourcen und eine oder mehr zweite Funkressourcen zu messen, wobei die eine oder mehr ersten Funkressourcen und die eine oder mehr zweiten Funkressourcen zum Übertragen von Positionierungsreferenzsignalen dienen,
**dadurch gekennzeichnet, dass**
die Vorrichtung dazu konfiguriert ist, ansprechend auf ein bestimmtes Ereignis ein Messen der einen oder mehr zweiten Funkressourcen zusätzlich zu oder anstelle der einen oder mehr ersten Funkressourcen für die Positionsmessung zu aktivieren oder deaktivieren,
wobei das bestimmte Ereignis eine Messung eines vorbestimmten Positionierungsreferenzsignals ist.

2. Vorrichtung (600) gemäß Anspruch 1, wobei die Vorrichtung dazu konfiguriert ist, jeweilige Zeitrahmen für die eine oder mehr zweiten Funkressourcen aus einer Zeitgebungsinformation herzuleiten, die einen Zeitversatz zwischen der einen oder den mehr zweiten Funkressourcen und einer oder mehr der einen oder mehr ersten Funkressourcen anzeigt.

3. Vorrichtung (600) gemäß Anspruch 1 oder 2, wobei die Vorrichtung dazu konfiguriert ist, die Zeitrahmen für die eine oder mehr zweiten Funkressourcen und/oder Zeitrahmen für die eine oder mehr ersten Funkressourcen unabhängig von einer Information über eine Zeitgebung eines Übertragungspunkts herzuleiten, der zur Übertragung eines Referenzsignals unter Verwendung der einen oder mehr zweiten Funkressourcen erwartet wird.

4. Vorrichtung (600) gemäß einem der Ansprüche 1 bis 3, wobei die Vorrichtung dazu konfiguriert ist, Funkressourcen innerhalb eines Erfassungsfensters zu messen, um so ein erstes Referenzsignal zu erfassen, das bei einer oder mehr der ersten Funkressourcen signalisiert wird, und

jeweilige Zeitrahmen für eine oder mehr der zweiten Funkressourcen aus einer Zeitgebungsinformation herzuleiten, die einen Zeitversatz zwischen der einen oder den mehr zweiten Funkressourcen und dem ersten Referenzsignal anzeigt, das bei der einen oder den mehr ersten Funkressourcen erfasst wird.

5. Vorrichtung (600) gemäß einem der Ansprüche 3 oder 4, wobei die Vorrichtung dazu konfiguriert ist, das Messen der einen oder mehr zweiten Funkressourcen zusätzlich zu der einen oder den mehr ersten Funkressourcen in Abhängigkeit von der Zeitgebungsinformation über die eine oder mehr ersten Funkressourcen und die eine oder mehr zweiten Funkressourcen zu aktivieren oder deaktivieren.

6. Vorrichtung (600) gemäß einem der Ansprüche 1 bis 5, bei der eine Menge von einer oder mehr der zweiten Funkressourcen einer der ersten Funkressourcen zugeordnet ist, und wobei die Menge zweiter Funkressourcen einen vorkonfigurierten zeitlichen Versatz zu der zugeordneten ersten Funkressource aufweist.

7. Vorrichtung (600) gemäß einem der Ansprüche 1 bis 6, wobei die Vorrichtung dazu konfiguriert ist, zwei oder mehr der zweiten Funkressourcen gleichzeitig zu messen.

8. Vorrichtung (600) gemäß Anspruch 7, bei der jede der ersten und zweiten Funkressourcen einer Trägerfrequenz und/oder einem Frequenzband und/oder einer Frequenzschicht zugeordnet ist.

9. Vorrichtung (600) gemäß einem der Ansprüche 1 bis 8, bei der eine der ersten Funkressourcen in einem ersten Frequenzbereich liegt, wobei eine der zweiten Funkressourcen in einem zweiten Frequenzbereich innerhalb eines gemeinsamen Zeitraums liegt, und

wobei die Vorrichtung dazu konfiguriert ist, angesammelte Funkressourcen zu messen, um so eine kombinierte Messinformation zu erhalten, wobei die angesammelten Funkressourcen die erste Funkressource und die zweite Funkressource aufweisen.

10. Vorrichtung (700) für ein Drahtloskommunikationsnetz mit einer oder mehr Antennen zum Übertragen eines Funksignals,

wobei die Vorrichtung dazu konfiguriert oder vorkonfiguriert ist, für eine Positionsmessung ein oder mehr erste Referenzsignale unter Verwendung von einer oder mehr ersten Funkressourcen und ein oder mehr zweite Referenzsignale unter Verwendung von einer oder mehr zweiten Funkressourcen zu übertragen, **dadurch gekennzeichnet, dass**

die Vorrichtung dazu konfiguriert ist, ansprechend auf einen Empfang einer Aktivierungsinformation, die eine Aktivierung oder eine Deaktivierung einer Übertragung des einen oder der mehr zweiten Referenzsignale anfordert, eine Übertragung des einen oder der mehr zweiten Referenzsignale zusätzlich zu oder anstelle des einen oder der mehr ersten Referenzsignale für die Positionsmessung zu aktivieren oder deaktivieren.

11. Ortsverwaltungsfunktions-, LMF-, Vorrichtung (550) für ein Drahtloskommunikationsnetz, **dadurch gekennzeichnet, dass**

die Vorrichtung dazu dient, an einen Übertragungspunkt eine Aktivierungsinformation bereitzustellen, die eine Aktivierung oder eine Deaktivierung einer Übertragung von einem oder mehr zweiten Referenzsignalen zusätzlich zu oder anstelle von einem oder mehr ersten Referenzsignalen für eine Positionsmessung zwischen dem Übertragungspunkt und einem Nutzergerät, UE, anfordert,

wobei die Vorrichtung dazu dient, die Aktivierungsinformation ansprechend auf einen Empfang einer Aktivierungsanforderung von dem UE bereitzustellen.

12. Verfahren zum Betreiben einer Vorrichtung, z. B. eines Nutzergeräts, UE, für ein Drahtloskommunikationsnetz, das folgenden Schritt aufweist:

Messen, für eine Positionsmessung, von einer oder mehr ersten Funkressourcen und einer oder mehr zweiten Funkressourcen, wobei die eine oder mehr ersten Funkressourcen und die eine oder mehr zweiten Funkressourcen zum Übertragen von Positionierungsreferenzsignalen dienen,
**dadurch gekennzeichnet, dass** das Verfahren folgenden Schritt aufweist:

Aktivieren oder Deaktivieren, ansprechend auf ein bestimmtes Ereignis, eines Messens der einen oder mehr zweiten Funkressourcen zusätzlich zu oder anstelle der einen oder mehr ersten Funkressourcen für die Positionsmessung,
wobei das bestimmte Ereignis eine Messung eines vorbestimmten Positionierungsreferenzsignals ist.

**13.** Verfahren zum Betreiben einer Vorrichtung, z. B. einer Netzeinheit, z. B. eines Übertragungsempfangspunkts, für ein Drahtloskommunikationsnetz, das folgenden Schritt aufweist:

Übertragen, für eine Positionsmessung, von einem oder mehr ersten Referenzsignalen unter Verwendung von einer oder mehr ersten Funkressourcen und von einem oder mehr zweiten Referenzsignalen unter Verwendung von einer oder mehr zweiten Funkressourcen,
**dadurch gekennzeichnet, dass** das Verfahren folgenden Schritt aufweist:
Aktivieren oder Deaktivieren, ansprechend auf einen Empfang einer Aktivierungsinformation, die eine Aktivierung oder eine Deaktivierung einer Übertragung des einen oder der mehr zweiten Referenzsignale anfordert, einer Übertragung des einen oder der mehr zweiten Referenzsignale zusätzlich zu oder anstelle des einen oder der mehr ersten Referenzsignale für die Positionsmessung.

**14.** Verfahren zum Betreiben einer Ortsverwaltungsfunktions-, LMF-, Vorrichtung für ein Drahtloskommunikationssystem, **dadurch gekennzeichnet, dass**
das Verfahren ansprechend auf einen Empfang einer Aktivierungsanforderung von einem Benutzergerät, UE, an einen Übertragungspunkt ein Bereitstellen einer Aktivierungsinformation aufweist, die eine Aktivierung oder eine Deaktivierung einer Übertragung von einem oder mehr zweiten Referenzsignalen zusätzlich zu oder anstelle von einem oder mehr ersten Referenzsignalen für eine Positionsmessung zwischen dem Übertragungspunkt und dem UE anfordert.

**15.** Verfahren zum Betreiben eines Drahtloskommunikationssystems (510), das folgende Schritte aufweist:

Durchführen einer Positionsmessung eines Nutzergeräts (500), das in einer Dienstverbindung zu einem ersten Übertragungspunkt des Drahtloskommunikationssystems steht, wobei die Positionsmessung zum Bestimmen der Position des Nutzergeräts dient,
Übertragen, für die Positionsmessung, von einem oder mehr ersten Referenzsignalen an einer oder mehr ersten Funkressourcen mittels eines ersten Übertragungspunkts,
Übertragen, für die Positionsmessung, von einem oder mehr zweiten Referenzsignalen an einer oder mehr zweiten Funkressourcen mittels eines zweiten Übertragungspunkts,
wobei die eine oder mehr ersten Funkressourcen und die eine oder mehr zweiten Funkressourcen zum Übertragen von Positionierungsreferenzsignalen dienen,
**dadurch gekennzeichnet, dass** das Verfahren folgenden Schritt aufweist:
Aktivieren oder Deaktivieren, ansprechend auf eine Messung eines vorbestimmten Positionierungsreferenzsignals durch das Nutzergerät, eines Messens der einen oder mehr zweiten Funkressourcen durch das Nutzergerät zusätzlich zu oder anstelle der einen oder mehr ersten Funkressourcen für die Positionsmessung.

## Revendications

**1.** Appareil (600), par exemple dispositif utilisateur, UE, pour un réseau de communication sans fil, comprenant une ou plusieurs antennes destinées à recevoir un signal radio,

dans lequel l'appareil est configuré ou préconfiguré pour mesurer, pour une mesure de position, une ou plusieurs premières ressources radio et une ou plusieurs deuxièmes ressources radio, dans lequel les une ou plusieurs premières ressources radio et les une ou plusieurs deuxièmes ressources radio servent à transmettre des signaux de référence de positionnement,
**caractérisé en ce que**
l'appareil est configuré pour activer ou désactiver, en réponse à un certain événement, une mesure des une ou plusieurs deuxièmes ressources radio en plus, ou à la place, des une ou plusieurs premières ressources radio pour la mesure de position,
dans lequel le certain événement est une mesure d'un signal de référence de positionnement prédéterminé.

2. Appareil (600) selon la revendication 1, dans lequel l'appareil est configuré pour déduire des trames temporelles respectives pour les une ou plusieurs deuxièmes ressources radio d'une information de temporisation qui est indicative d'un décalage temporel entre les une ou plusieurs deuxièmes ressources radio et une ou plusieurs des une ou plusieurs premières ressources radio.

3. Appareil (600) selon la revendication 1 ou 2, dans lequel l'appareil est configuré pour déduire les trames temporelles pour les une ou plusieurs deuxièmes ressources radio et/ou les trames temporelles pour les une ou plusieurs premières ressources radio indépendamment d'une information concernant une temporisation d'un point de transmission qui est censé transmettre un signal de référence à l'aide des une ou plusieurs deuxièmes ressources radio.

4. Appareil (600) selon l'une quelconque des revendications 1 à 3, dans lequel l'appareil est configuré pour mesurer des ressources radio dans une fenêtre de détection de manière à détecter un premier signal de référence qui est signalé dans une ou plusieurs des premières ressources radio, et déduire des trames temporelles respectives pour une ou plusieurs des deuxièmes ressources radio d'une information de temporisation qui est indicative d'un décalage temporel entre les une ou plusieurs deuxièmes ressources radio et le premier signal de référence détecté dans les une ou plusieurs premières ressources radio.

5. Appareil (600) selon l'une quelconque des revendications 3 ou 4, dans lequel l'appareil est configuré pour activer ou désactiver la mesure des une ou plusieurs deuxièmes ressources radio en plus des une ou plusieurs premières ressources radio en fonction de l'information de temporisation concernant les une ou plusieurs premières ressources radio et les une ou plusieurs deuxièmes ressources radio.

6. Appareil (600) selon l'une quelconque des revendications 1 à 5, dans lequel un ensemble d'une ou plusieurs des deuxièmes ressources radio est associé à l'une des premières ressources radio, et dans lequel l'ensemble de deuxièmes ressources radio présente un décalage temporel préconfiguré vis-à-vis de la première ressource radio associée.

7. Appareil (600) selon l'une quelconque des revendications 1 à 6, dans lequel l'appareil est configuré pour mesurer simultanément deux ou plus des deuxièmes ressources radio.

8. Appareil (600) selon la revendication 7, dans lequel chacune des premières et deuxièmes ressources radio est associée à une fréquence porteuse et/ou à une bande de fréquence et/ou à une couche de fréquence.

9. Appareil (600) selon l'une quelconque des revendications 1 à 8, dans lequel l'une des premières ressources radio est dans une première plage de fréquences, dans lequel l'une des deuxièmes ressources radio est dans une deuxième plage de fréquences dans une période de temps commune, et
dans lequel l'appareil est configuré pour mesurer des ressources radio regroupées de manière à obtenir une information de mesure combinée, les ressources radio regroupées comprenant la première ressource radio et la deuxième ressource radio.

10. Appareil (700) pour un réseau de communication sans fil, comprenant une ou plusieurs antennes pour transmettre un signal radio,

dans lequel l'appareil est configuré ou préconfiguré pour transmettre, pour une mesure de position, un ou plusieurs premiers signaux de référence en utilisant une ou plusieurs premières ressources radio et un ou plusieurs deuxièmes signaux de référence en utilisant une ou plusieurs deuxièmes ressources radio,
**caractérisé en ce que**
l'appareil est configuré pour activer ou désactiver, en réponse à une réception d'une information d'activation demandant une activation ou une désactivation d'une transmission des un ou plusieurs deuxièmes signaux de référence, une transmission des un ou plusieurs deuxièmes signaux de référence en plus, ou à la place, des un ou plusieurs premiers signaux de référence pour la mesure de position.

11. Appareil à fonction de gestion d'emplacement, LMF, (550), pour un réseau de communication sans fil, **caractérisé en ce que**

l'appareil sert à fournir, à un point de transmission, une information d'activation demandant une activation ou une désactivation d'une transmission d'un ou plusieurs deuxièmes signaux de référence en plus, ou à la place, d'un ou plusieurs premiers signaux de référence pour une mesure de position entre le point de transmission et un dispositif utilisateur, UE,

dans lequel l'appareil sert à fournir l'information d'activation en réponse à une réception d'une demande d'activation provenant de l'UE.

12. Procédé de fonctionnement d'un appareil, par exemple d'un dispositif utilisateur, UE, pour un réseau de communication sans fil, comprenant le fait de :

mesurer, pour une mesure de position, une ou plusieurs premières ressources radio et une ou plusieurs deuxièmes ressources radio, dans lequel les une ou plusieurs premières ressources radio et les une ou plusieurs deuxièmes ressources radio servent à transmettre des signaux de référence de positionnement,
**caractérisé en ce que** le procédé comprend le fait de :

activer ou désactiver, en réponse à un certain événement, une mesure des une ou plusieurs deuxièmes ressources radio en plus, ou à la place, des une ou plusieurs premières ressources radio pour la mesure de position,
dans lequel le certain événement est une mesure d'un signal de référence de positionnement prédéterminé.

13. Procédé de fonctionnement d'un appareil, par exemple d'une entité de réseau, par exemple d'un point de réception de transmission, pour un réseau de communication sans fil, comprenant le fait de :

transmettre, pour une mesure de position, un ou plusieurs premiers signaux de référence en utilisant une ou plusieurs premières ressources radio et un ou plusieurs deuxièmes signaux de référence en utilisant une ou plusieurs deuxièmes ressources radio,
**caractérisé en ce que** le procédé comprend le fait de :
activer ou désactiver, en réponse à une réception d'une information d'activation demandant une activation ou une désactivation d'une transmission des un ou plusieurs deuxièmes signaux de référence, une transmission des un ou plusieurs deuxièmes signaux de référence en plus, ou à la place, des un ou plusieurs premiers signaux de référence pour la mesure de position.

14. Procédé de fonctionnement d'un appareil à fonction de gestion d'emplacement, LMF, pour un système de communication sans fil, **caractérisé en ce que**
le procédé comprend le fait de fournir, en réponse à une réception d'une demande d'activation provenant d'un dispositif utilisateur, UE, à un point de transmission, une information d'activation demandant une activation ou une désactivation d'une transmission d'un ou plusieurs deuxièmes signaux de référence en plus, ou à la place, d'un ou plusieurs premiers signaux de référence pour une mesure de position entre le point de transmission et l'UE.

15. Procédé de fonctionnement d'un système de communication sans fil (510), comprenant le fait de

réaliser une mesure de position d'un dispositif utilisateur (500) qui est en connexion de service avec un premier point de transmission du système de communication sans fil, la mesure de position servant à déterminer la position du dispositif utilisateur,
transmettre, pour la mesure de position, au moyen d'un premier point de transmission, un ou plusieurs premiers signaux de référence sur une ou plusieurs premières ressources radio,
transmettre, pour la mesure de position, au moyen d'un deuxième point de transmission, un ou plusieurs deuxièmes signaux de référence sur une ou plusieurs deuxièmes ressources radio,
dans lequel les une ou plusieurs premières ressources radio et les une ou plusieurs deuxièmes ressources radio servent à transmettre des signaux de référence de positionnement,
**caractérisé en ce que** le procédé comprend le fait de :
activer ou désactiver, en réponse à une mesure d'un signal de référence de positionnement prédéterminé par le dispositif utilisateur, une mesure des une ou plusieurs deuxièmes ressources radio par le dispositif utilisateur en plus, ou à la place, des une ou plusieurs premières ressources radio pour la mesure de position.

100

102 core network

backhaul 114

RAN₁

RAN₂

RANₙ

external networks

## Fig. 1A

108₁  108₂

UE₁

UE₂

gNBs  core

116₂  gNB₂  114₂

106₂

ANT

gNBs  core

gNB₁

116₁  114₁

106₁

108₃

112₂  112₁

110₁

IoT  UE₃  IoT

gNBs  core

116₄  gNB₄  114₄

106₄

110₂

gNBs  core

gNB₅

116₅  114₅

106₅

gNBs  core

gNB₃

116₃  114₃

106₃

RANn

## Fig. 1B

## Fig. 2A

## Fig. 2B

Fig. 3

Fig. 4

Fig. 5

EP 4 252 021 B1

600

620

position measurement processor

receiver 630

660

event

664

radio resource configuration storage

first radio resource configuration 670

second radio resource configuration 680

662

Fig. 6

first reference signal

second reference signal

772

782

700

720

732

transmitter

760

position measurement
processor

766

event

Fig. 7

Fig. 8A

EP 4 252 021 B1

P-PRS Resource1   874a
P-PRS Resource2   874b

P-PRS Resource1   874a
P-PRS Resource2   874b

883b
883a
884d
884a

AP PRS 1
AP PRS 4
884b

AP PRS 2
AP PRS 5   884e
884c

AP PRS 3
AP PRS 6   884f

P-PRS Resource1   874a
P-PRS Resource2   874b

time

frequency

Fig. 8B

Fig. 9

Fig. 10

Fig. 11

4 Slot periodicity for a 15 Khz SCS

## Fig. 12A

8 Slot periodicity for a 30 Khz SCS
(2 Slot(0/1) in a SF)

## Fig. 12B

Fig. 13

serving TRP

set of aperiodic resources
1384

TRP_N

1374

PRS          O-PRS          PRS

uncertainty window

UE

SFN0   DCI        PRS        O-PRS                    PRS

tof          O-PRS relative
             offset

1354

1356 (optional)

1385

EP 4 252 021 B1

Fig. 14

Fig. 15

EP 4 252 021 B1

Fig. 16

frequency band A          frequency band B

Intra-band contiguous

Fig. 17A

frequency band A          frequency band B

Intra-band non-contiguous

Fig. 17B

component carrier 1    component carrier 2

frequency band A          frequency band B

Intra-band non-contiguous

Fig. 17C

Fig. 18

602

processor

606

main memory

608

secondary memory

604

I/F

610

1900

612

Fig. 19

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20200225309 A1
- US 20180217228 A1
- US 20200351618 A1
- US 20170111880 A1